# EUROPEAN PATENT SPECIFICATION

(11) **EP 2 956 387 B1**
(45) Date of publication and mention of the grant of the patent: **05.04.2017**
(21) Application number: 14705602.2
(22) Date of filing: 12.02.2014
(51) Int. Cl.: B65D 85/804

(54) **CAPSULE, SYSTEM AND METHOD FOR PREPARING A BEVERAGE**
KAPSEL, SYSTEM UND VERFAHREN ZUR HERSTELLUNG EINES GETRÄNKS
CAPSULE, SYSTÈME ET PROCÉDÉ DE PRÉPARATION DE BOISSON

(30) Priority: 12.02.2013 EP 13154958
(43) Date of publication of application: 23.12.2015
(73) Proprietor: Koninklijke Douwe Egberts B.V., 3532 AD Utrecht (NL)
(72) Inventor: KAMERBEEK, Ralf, NL-3532 AD Utrecht (NL); BIESHEUVEL, Arend Cornelis Jacobus, NL-3532 AD Utrecht (NL)
(74) Representative: V.O.
(86) International application number: PCT/NL2014/050085
(87) International publication number: WO 2014/126463

(56) References cited:
- EP-A1- 2 239 212
- WO-A1-2010/137953
- WO-A1-2012/007257
- WO-A1-2012/080928
- US-A1- 2010 239 717

## Description

The invention relates to a capsule for preparing a predetermined quantity of beverage suitable for consumption using an extractable product according to the preamble of claim 1.

Such a capsule is for instance known from EP-A1-2239212 and can be used in an apparatus for preparing a beverage.

It is an object of the invention to provide an improved open capsule for the preparation of a beverage, wherein the process of preparing the beverage is better controllable and thus better reproducible.

Thereto, according to a first aspect of the invention, a capsule of the above described type is provided, wherein the filter layer does not cover any of the exit openings in the foil and the exit openings directly face the extractable product. This means that each opening is completely uncovered by the filter layer.

By providing a filter layer between the extractable product, i.e. roast and ground coffee, and the foil of the lid, the smallest particles of the roast and ground coffee, i.e. the fines, are caught by the filter layer material. The fines will spread in the filter layer before said particles will reach the exit openings in the foil. Since at least not all fines will reach the exit openings, a desired flow restriction, thus not restricting the water flow too much, is obtained. When using the improved coffee capsule, the process of preparing a beverage may be better controllable and thus better reproducible. With such an improved capsule the extraction conditions of the coffee may be improved. The cooperation between the foil of the lid and the additional filter layer enables the possibility to vary with the coffee parameters such as the amount of coffee and the dimensions of the coffee particles, which may for instance be advantageous to prepare coffee with different coffee flavours. Applicant found that the capsule according to the invention may especially be used to advantage when comprising coffee particles that are brittle and thus comprise a large amount of fines. For instance, decaffeinated coffee particles may comprise a relative large amount of fines. Directly faces implies that an exit opening is not covered by a separate sheet such that such opening is adjacent to or substantially abuts against the extractable product. The plurality of uncovered exit openings may however be separated from the extractable product by an empty space. However, it will be appreciated that this space is free from additional elements or materials. In this way, in use, a desired flow restriction is obtained by a build-up of fines reaching the plurality of exit openings that directly faces the extractable product.

Due to the filter layer, accumulating of the fines and/or covering of the exit openings is minimized. As the liquid under pressure enters the capsule via the bottom (which may be provided with inlet openings such as slits or may be opened by a coffee apparatus) in order to interact with the extractable product, the extractable product may be compacted. The presence of a filter layer between the extractable product, i.e. roast and ground coffee, and the foil of the lid, may allow a preferred flow to form through the filter layer, because the flow resistance through the filter layer is smaller than the flow resistance through the compacted extractable product. This preferred flow also positively influences the brewing time of a beverage. Also excessive compression of the coffee bed is minimized. Also area of compacted coffee in the prior art capsule is now filled with filtering paper, thereby providing a lower flow resistance in such area. As the liquid under pressure enters the capsule via the bottom in order to interact with the extractable product, the extractable product may be compacted. The presence of a filter layer between the extractable product, i.e. roast and ground coffee, and the foil of the lid, may allow a preferred flow to form through the filter layer, because the flow resistance through the filter layer is smaller than the flow resistance through the compacted extractable product. This preferred flow also positively influences the brewing time of a beverage. Furthermore, the improved capsule enables brewing of coffee with a brewing time that is better controllable. For instance, to prepare a coffee lungo, the brewing time may be between 40-50 seconds instead of between 38-55 seconds as with the known prior art capsule. Thus, the brewing time range will be smaller. Since fine particles of the roast and ground coffee are captured by the filter layer, these particles will not end up in the prepared beverage.. The foam layer is of a good quality. The foam layer is stable, has a clean appearance and has a uniform distribution of air bubbles. It is noted that "foam layer" refers to the crema layer that is provided on top of the prepared beverage. The crema layer will be generally thicker than the case wherein the complete foil and/to each exit opening would be covered by the filter layer. It was surprisingly found that due to preventing fines from reaching the foil, the capsule can be filled with a larger amount of coffee, and/or coffee with smaller particles may be used. The capsule according to the invention has a positive effect on the brewing time of the coffee and on the amount of dry matter comprised in the prepared beverage. When preparing coffee using a capsule according to the invention, the prepared coffee comprises more dry material (DMA), for instance approximately 15%, with respect to the described known open capsule. Furthermore, the amount of oil in the prepared coffee may be greatly reduced. This results in a coffee beverage of high quality. Since the foil stays intact during preparation of the beverage, the filter layer that is provided between said foil and the roast and ground coffee thus will also stay intact during preparation of the beverage.

Preferably, the substantially sheet shaped filter layer comprises a layer of paper filtering material, a layer of non-woven material or a layer of woven material. Preferably, the sheet shaped filter layer comprises a layer of paper filtering material or a layer of non-woven material. Such paper filtering material may comprise relatively small pores, at least smaller than the exit openings of the foil, which pores are adapted to retain the small particles of the roast and ground coffee before reaching the exit openings.

It is noted that WO2010137952 and WO2010137963 both disclose a capsule for preparing a predetermined quantity of beverage suitable for consumption, wherein the capsule may be an open capsule comprising a lid having an exit area for draining prepared beverage from the capsule. In both publications, the lid may comprise multiple layers of suitable porous and/or perforate material. However, the problem of accumulating of the fines that may cover the openings of the exit area is not recognised nor a suitable combination of layers is suggested to overcome said problem.

In further elaboration of the invention, the filter layer preferably extends substantially parallel along the lid at least across the maximal transversal cross section of the second open end of the capsule. The filter layer may comprise an opening in a centre area thereof. Alternatively, the filter layer may comprise one or more openings, possibly provided in a pattern, such as circular openings, rectangular openings and/or triangular openings.

According to a further aspect of the capsule according to the invention, the filter layer may abut against the lid. The filter layer may be provided against the lid and may stay at the desired location due to the fact that it is pressed tightly between the roast and ground coffee and the lid. Then the filter layer does not have to be connected to the capsule and/or the lid. Instead, the filter layer may be connected at a circumferential edge of the filter layer, preferably adjacent a circumferential edge of said lid. In another embodiment of the capsule according to the invention, the filter layer may be connected to the lid along the entire surface of the filter layer. The assembly of the filter layer and the lid can be prefabricated such that it can be mounted to the capsule in a single operating step. When connecting the filter layer to the lid, at least partly, the circumferential edge of the filter layer may be enclosed between the lid and an outwardly extending rim of the capsule. The filter layer may extend along the entire radial length of the outwardly extending rim such that the lid is connected to the rim via the filter layer. In that case the filter layer must be provided with at least one opening so that the exit openings are not covered by the filter layer. Alternatively, the filter layer may only extend along part of the radial length of the outwardly extending rim. Then, the lid is connected directly to the rim along the part of the radial length thereof that is not covered by the filter layer. It was found that if the filter material of the filter layer is relatively thin, the filter layer may be kept in position by the sealed connection between the foil and the rim. When the outer circumferential edge of the filter layer is connected to the rim or to the flexible foil, prepared beverage will not bypass the filter layer. The filter layer may have a thickness of approximately between 10µm-1mm, preferably between 50µm-0.2mm. The filter layer may also have a thickness in the range of 0.2mm- 10 mm, preferably 0.2 mm- 5mm, more preferably 0.2-2mm while excluding 0.2 mm from such range. In another embodiment of the invention, the filter layer may comprise sealing properties for enhancing the sealing capability thereof.

To obtain the desired spreading of the small particles of the roast and ground coffee along the filter material, it may be advantageous if the paper filtering material is of paper having a weight of approximately 1-250 grams/m2, more preferably between 10-100 grams/m2, preferably approximately 15-50 grams/m2. Alternatively, the filter layer may comprise a non-woven material layer comprising a synthetic material, for instance comprising high density polyethylene (HDPE). An example of such a filter material is Tyvek. Such a non-woven material layer may comprise a similar thickness and weight as above indicated with the paper filtering material. In a further alternative embodiment, the filter layer may comprise a screen of woven or non-woven material. The screen may for instance be of a plastic material, such as PE, or of a metal, for instance a thin layer of aluminium.

The paper filtering material or the non-woven material of the filter layer may have an air permeability of maximal 550 mm/second measured at a pressure of approximately 200 Pascal. Such air permeability is indicative of filtering properties that enhance retaining the fines to prevent that said fines from reaching the exit holes in the foil. It is noted that the air permeability is measured with an Akustron Air Permeability Tester that is configured to measure air permeability of filter papers, nonwovens and textile fabrics within a range of 10-3000mm/second at Δp=200 Pascal.

In order to enhance the sealing properties of the filter layer for sealing it to the foil, the filter layer material may comprise a plastic or may be coated. In that case preferably the coating or plastic faces the foil. For instance, the filter layer may be provided with polyethylene (PE) or another suitable plastic.

In an alternative embodiment, the filter layer may be connected to the foil at one surface of the filter layer and to another foil layer provided on an opposing surface of the filter layer. Such further foil layer may comprise openings that are slightly larger than the openings in the lid and much larger than the pores in the filter layer. Such an exit layer may be prefabricated and easily connected to the capsule body.

The foil of the lid may be configured to stay in tact when being used in an apparatus that comprises lid piercing means intended for piercing a lid of a closed capsule, i.e. a capsule at least comprising a closed lid. The tear strength and stiffness of the foil may thus be chosen such that rupture of the foil against the lid piercing means under the influence of e.g. fluid pressure is prevented.

In an embodiment of the invention, the foil may be a multilayer foil. The multilayer foil may comprise a first material layer and a second material layer. The first layer may have a higher stiffness than the second layer and the second layer may have a higher tear strength than the first layer. The first layer may be of polyethylene terephthalate (PET-P) and the second layer may be of co-polymer polypropylene (CPP). Preferably, the layer of PET-P has a thickness of approximately 15µm and the layer of CPP has a thickness of approximately 30µm. The layer of CPP may have higher tear strength than the layer of PET-P. The layer of PET-P may have a higher stiffness than the layer of CPP. These layers are bonded together. Such a multilayer foil avoids the rupture of the lid under the influence of e.g. fluid pressure.

The exit area of the foil may for instance comprise 50-250 openings, preferably 70-190, more preferably 100-160 openings. The open surface of the foil, i.e. the total surface of the openings, may be approximately between 0.4-49.1mm². The average diameter of the exit openings may be between 0.1 and 0.5mm. The foil may comprise a combination of openings with different diameters and/or provided in different patterns. Such a foil may form a sufficiently low flow resistance to prevent tearing of the lid of the capsule during preparation of the beverage which is advantageous for controlled preparation of the beverage. As mentioned before, due to the foil, the filter layer will stay intact as well.

The capsule according to the invention is suitable for preparing a predetermined amount of beverage by supplying a predetermined amount of hot water under high pressure to the capsule, thereby extracting the beverage ingredient with the supplied water. For instance, the exchangeable capsule may comprise a predetermined amount of beverage ingredient, for instance 4-11 grams, preferably 5-8 grams, more preferably 5.3-6 grams. Such a capsule is suitable and intended, for preparing a single portion of the beverage, preferably a single cup of the beverage, e.g. from 20-30 ml excluding 30 ml or 30-200ml of the prepared beverage. The exchangeable capsule, thus, is a single-portion-pack. The exchangeable capsule according to the invention may be a disposable capsule. Preferably, the capsule inner space may have a volume of approximately 10-20 ml, preferably 11 - 18 ml. This generally makes the capsule suitable for preparing one cup of a beverage. A capsule for instance for preparing an espresso may have an inner space of approximately 12 ml. To enable the liquid entering the capsule, the bottom of the capsule may comprise an entrance filter, for instance a substantially rigid bottom comprising a plurality of entrance openings or for instance of a porous sheet, such as a sheet of paper or the like non-woven material, or a perforate sheet, such as a polymeric film provided with a plurality of entrance openings, for supplying the fluid to the extractable product there through. The entrance filter may, for example, comprise a substantially rigid bottom with slits. In an embodiment, the slits may extend from a centre of the bottom radially outward towards the outer circumferential edge of the entrance filter. In an alternative embodiment, the slits may be arranged in a different pattern. By providing the entrance opening with an entrance filter, spoiling roast and ground coffee for instance when removing the capsule from the apparatus is prevented as well. The entrance filter may comprise, at a centre area thereof, a recess. Such an entrance filter is for instance described in WO2012019902. The entrance filter may be configured to remain intact upon use of the capsule in an apparatus for preparing a beverage. Even if the apparatus comprises bottom piercing means to pierce a bottom of a closed capsule, the bottom of the capsule according to the invention can be configured to remain intact. In an alternative embodiment of the invention, the capsule may comprise a closed bottom that in use is pierced by the lid piercing means to provide a supply opening in the capsule to enable fluid supply to the capsule inner space.

This generally makes the capsule suitable for preparing one cup of a beverage. According to the invention the exit openings directly face the extractable product. This has as an advantage that, in use, the exit openings may be partly blocked by fines in the ingredient. If the exit openings are partly blocked, in use, there will be a raise of pressure if water under pressure (for example 1-20 bar)is submitted into the capsule. This raise of pressure has a result that gases may escape from the extractable product if the extractable product is ground coffee. These gasses provide a crema layer on to[ of the beverage if the beverage is collected in a cup. The filter layer makes sure on the other had that the exit openings are not blocked to such an extend that the brewing time becomes unacceptable high such as for example around 55-65 seconds. It is believed that due to the relatively low flow resistance of the filter layer a flow rate of the fluid in the capsule may increase which may have as a result that the exit openings are not blocked to an unacceptable extend. Also the brewing time does not become unacceptable small so that the amount of DMA in the beverage would become too small.
Thus by dimensioning the size of the filter layer, the amount and positions of the exit openings and the size of the exit openings depending on the type of ingredient a well balanced process for brewing the beverage is obtained. For example, the surface of the foil which is not covered by the filter layer comprises p% of the total surface area of the foil which forms a boundary of the inner space of the capsule wherein p lays in the range of 29-99.5, preferably in the range of 44-99.5, more preferably in the range of 54-99.5. Preferably the surface area of the foil which is not covered by the filter layer and which is provided with the exit openings is f*p% wherein f lays in the range of 0.5-1. If p=1 the exit openings are spread all over the surface of the foil which is not covered by the filter layer. Experiments have however shown that the exit openings may also lay in only a portion of the area of the foil which is not covered by the paper layer. It has for example been found that it may be beneficial if an circumferential area of the foil which is adjacent the circumferential wall is not provided with the exit openings wherein this area is not covered by the filer layer in addition to other areas which are provided with exit opening and which are not covered by the filter layer so as the provide a reduced brewing time on the one hand without substantially lowering the amount of DMA in the beverage on the other hand. Alternatively the filter layer extends to the circumferential wall, more particularly wherein the full outer boundary of the filter layer extends to the circumferential wall. In an embodiment a first portion of the surface area of the foil which is covered by the filter layer lays at least substantially completely adjacent the circumferential wall. More particularly in such an embodiment c% an outer boundary of the first portion of the foil lays adjacent the circumferential wall, wherein c is greater than 50, preferably greater than 85, more preferably greater than 95 and wherein c is most preferably 100. Such embodiment may provide satisfactory brewing results as discussed above wherein the brewing result is also very predictable. A distance is for example adjacent if the distance is smaller than 3% of a largest diameter of the inner space of the capsule adjacent the foil and/or wherein preferably b is smaller than 0.5mm. In the embodiment discussed preferably the filter layer extends to each position of the circumferential wall adjacent the foil. In the capsule there is a preferred flow from the entrance side (the bottom) to the exit side (the foil) of the capsule along the circumferential side wall. It is believed that this flow is deflected into the filter layer and continues towards a centre area of the capsule because the filter layer has a relatively low flow resistance. Thereby the brewing time is improved.

In an alternative embodiment the filter layer does not extend to the circumferential wall. In that case it may form an island in a centre area of the foil. In that case the flow of fluid in the direction from the entrance side towards the filter layer on the exit side may be deflected into the filter layer and flows in a radial direction in the direction of the circumferential wall towards the exist openings. Again the flow through the filter layer is believed to be relatively easy due to the relative low flow resistance of the filer layer in the capsule during use. Thereby the speed of the fluid may be increased resulting in a prevention of the exit openings becoming blocked to much, so that the brewing time remains acceptable short on the one hand and the height of the crema layer on the beverage as well as the amount of DMA in the beverage becomes predictably and satisfactory on the other hand.
It is further possible in each of the embodiments discussed that the filter layer comprises an (additional) opening, for example in a centre area of the filter layer. The opening has a surface area which is greater than surface area of exit opening having the largest surface area. In the area of the opening in the filter layer at least one or a plurality of exit openings may be provided. If no exit openings are provided, this area is especially used to balance the average flow resistance of the fluid in the capsule. Also the filter layer may comprise a plurality of openings. In that case preferably each opening has a surface area which is greater than surface area of exit opening having the largest surface area.

In an embodiment a second portion of the surface area of the foil wherein the plurality of exit openings are distributed lays at least substantially completely at a distance from the circumferential wall. In that case the filer layer may for example have the shape of a ring.

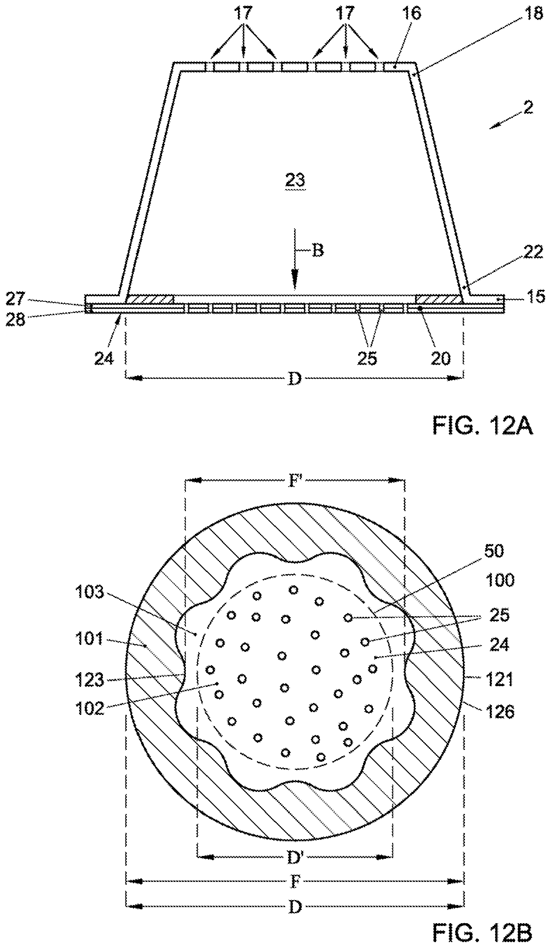

In an embodiment a third portion of the surface area of the foil which is covered by the filter layer lays at least substantially completely at a distance from the circumferential wall. In that case the filter layer may have the shape of an island as discussed above. In that case the filter layer may have the shape of a disc. The filter layer may even have the shape of the DE-brand, which shape is shown in figure 12.
Preferably it would hold that a% of an outer circumferential boundary of the third portion of the surface area of the foil lays at a distance from the circumferential wall, wherein a is greater than 50, preferably greater than 85, more preferably greater than 95 and wherein a is most preferably 100 and wherein a distance is defined as 5-30% from a diameter of the inner space adjacent the foil. If a=100, the filter layer could be an island relative to the circumferential wall, if a is smaller than 100 it could be a peninsula. relative to the circumferential wall

In the example of the ring a centre opening of the or ring could have for example a largest diameter lays within the range of 25%-75% of the largest diameter of the inner space of the capsule at the foil. The area of the foil adjacent the circumferential wall and which is not covered by the ring may preferably x% of the total area of the foil which forms a boundary of the inner space wherein x lays in the range of 10-50, preferably in the range of 15-40. This provides satisfactory brewing results. A centre opening of the ring may for example have a largest diameter lays within the range of 15%-60% of the largest diameter of the inner space at the foil. In that case preferably an outer circumferential boundary of the filter layer lays adjacent the circumferential wall and wherein preferably the centre area has a cross section of S mm wherein S lays in the range of 12-26, preferably in the range of 14-25 and more preferably within the range of 16-24 and wherein preferably the outer diameter of the portion of the filter layer which forms a boundary of the inner space has across section of about 28-30mm and/or wherein preferably the diameter of the inner space near the foil is about 28-30mm.

Alternatively the filter layer may have the shape of a strip. In that case the filter layer having the shape of a strip may be provided with two opposite ends laying adjacent the circumferential wall and two opposite sides each laying at a distance from the circumferential wall.

Possibly it holds for each embodiment that centre of the filter at least substantially coincides with a centre of that part of the foil which forms a boundary of the inner space. Alternatively, possibly it holds for each embodiment that a centre of the filter layer is offset with a centre of that part of the foil which forms a boundary of the inner space in a direction parallel to the foil. A centre is in this case defined as a centre of gravity of a flat product having the same circumferential shape as the filter or the shape of that part of the foil which forms a boundary of the inner space respectively.
In a preferred embodiment an outer boundary of the surface area of the foil wherein the plurality of exit openings are distributed lays at least substantially completely or completely at a distance from the circumferential side wall. Optionally, in order to optimise the quality of the beverage on the one hand and the brewing time on the other hand the filter layer fills c% of the volume of the inner space of the capsule wherein c lays within the range of 0.1-8, preferably within the range of 0.1-6.5, more preferably within the range of 0.1-3. By reserving an volume of the inner space of the capsule which is filled by the filter layer provides, in use, a volume of the capsule in which a preferred flow may be established and/or through which a preferred flow may flow.

Preferably the volume that the filter layer fills is located adjacent to the foil, or at least in the vicinity of the foil.

Optionally, a flow resistance of the filter layer is higher than a flow resistance of the extractable product. Preferably a flow resistance of the filter layer is smaller than a flow resistance of the extractable product when being extracted with a fluid under a pressure of 9-18 bar. Possibly a flow resistance of the filter layer is G times smaller than a flow resistance of the extractable product when being extracted with a fluid under a pressure of 9-18 bar wherein G lays in the range of 10-30, preferably in the range of 15-25 more preferably in the range of 18-22. G is estimated on the basis of modelling.

During brewing, as the liquid under pressure enters the capsule via the bottom in order to interact with the extractable product, the extractable product is compacted. Choosing the filter layer to have a flow resistance smaller than the compacted bed may allow a preferred flow to form and/or to continue. Influencing the preferred flow leads to more controllable brewing conditions. In this way an improved beverage can be obtained reliably. It has been estimated with the aid of modelling that a filter layer having a flow resistance of approximately 20 times smaller than a flow resistance of the extractable product when being extracted is desirable. This also applies to such values provided elsewhere in this application

It will be clear that, when being extracted, implies supplying a fluid under a pressure of G bar wherein G lays in the range of 4-20, preferably in the range of 9-18. The fluid may be water. In this case the water under pressure may be supplied at a temperature higher than, for example, 70-90 degrees Celsius.

A flow resistance of the filter layer is preferably characterized by T wherein, while using a filter paper test device of the Herzberg design from Schroder Pruftechnik, T is the time in seconds for 100 ml of water to flow through an area of 10 cm2 of a sample of the filter layer in a direction perpendicular to a plane wherein the sample lays, with a starting water column of 33 cm, wherein the water temperature is at 20 degree C, wherein T lays in the range of 4-150, preferably 4-30, more preferably 5-20, for example in the range of 4-15 for filtering paper, for example in the range of 60-150 for white non woven and for example in the range of 45-80 for blue non woven. Preferably the density of the extractable product is D gr/cm3, wherein D lays in the range of 0.278-0.5, preferably within the range of 0.313-0.455, more preferably in the range of 0.379-0416. In that case the filter layer may influence the flow path of the fluid in the capsule.

Preferably the extractable product is ground coffee and wherein an average particle size of the extractable product is E micro meter wherein E lays in the range of 100-1000, preferably within the range of 200-750, more preferably in the range of 250-500.

Preferably the particles of the extractable product comprises L% fines in volume wherein L lays in the range of 7-60, preferably within the range of 8-30, more preferably in the range of 10-20. Fines are understood to be particles smaller than 100 µm. In this application the measurement of the amount of fines is carried out with an Sympatec laser diffraction apparatus with a r6 lens.

By providing a filter layer, the applicant found that more possibilities regarding the coffee parameters of the capsule for brewing coffee are available. Different densities, average particle sizes, and/or percentages of fines of the extractable product may be used, while maintaining a brewing process that is reproducible and/or controllable. Additionally, an improved cup of coffee may be obtained having desired dry matter amount, crema layer and an acceptable brewing time for the user.

In the discussed embodiments the exit area of the foil (24) may for example comprises 50-250 openings (25), preferably 70-190, more preferably 100-160 openings. Also preferably an average open area of the exit opening is z mm2 per exit opening, wherein z lays in the range of 0.008-0.2, preferably in the range of 0.03-0.13, more preferably in the range of 0.05-0.1. A average largest diameter of each exit opening may be d µm per exit opening, wherein d lays in the range of 100-500, preferably in the range of 200-400, more preferably in the range of 250-350.

In a practical embodiment the filter layer has the shape of a ring wherein an outer circumferential boundary of the filter layer lays adjacent the circumferential wall and wherein preferably the centre area has a cross section of S mm wherein S lays in the range of 45-85, preferably in the range of 50-80 and more preferably within the range of 60-75 and wherein preferably the outer diameter of the portion of the filter layer which forms a boundary of the inner space has a cross section of about 28-30mm and/or wherein preferably the diameter of the inner space near the foil is about 28-30mm.
The filter layer may have for example a thickness of T mm wherein T is in the range of 0.05-0.01 excluding 0.01, or 0.01-1 or 1-10 excluding 1, preferably 0.05 - 0.5 , more preferably 0.05-0.2. The thickness of the filter may influence a preferred path through the filter, as well as increase the amount of fines caught by the filter. Additional filter material provides an additional volume of the inner space of the capsule in which a preferred flow may be established and/or through which a preferred flow may flow.

Optionally, the filter layer comprises a stack of sub filter layer wherein each sub filter layer is sheet shaped. Through the stacking of sub filter layers a desired filter thickness may be achieved. The stack may for example comprise 2-10 sub filer layers.

Optionally, the extractable product comprises or consists of H grams of ground coffee wherein H is in the range of 4-11, preferably in the range of 5-8 more preferably in the range of 5.3-6. Due to the filter layer more ground coffee can be provided in the capsule without an increased risk that the foil is blocked by fines during brewing.

Also by providing a filter layer, the applicant found that more possibilities regarding the coffee parameters of the capsule for brewing coffee are available. Different amounts of ground coffee and/or finer coffee may be used, while maintain a brewing process that is reproducible and/or controllable. Additionally, an improved cup of coffee may be obtained having desired dry matter amount, crema layer and an acceptable brewing time for the user.

For each of the embodiments the bottom comprises a plurality of slits forming entrance openings of the capsule.

The invention also relates to a system for preparing a predetermined quantity of beverage suitable for consumption using an extractable product, comprising the above described exchangeable capsule, and an apparatus comprising a receptacle for holding the exchangeable capsule, and a fluid dispensing device for supplying an amount of a fluid, such as water, under pressure to the exchangeable capsule, wherein the fluid dispensing device is arranged for supplying the fluid to the extractable product through the bottom for forming the beverage, wherein the receptacle comprises a support surface, and wherein the capsule is arranged to at least partly abut against the support surface for draining the prepared beverage from the capsule through the lid and through the support surface, wherein the system comprises an outlet which, in use, is in fluid communication with the lid for draining the prepared beverage from the capsule and supplying the beverage to a container such as a cup. When using the capsule according to the invention in the apparatus of the system, the same effects and advantages are obtained as described with the capsule. The support surface of the apparatus of the system may comprise lid piercing means intended for piercing an exit area of for instance a hermetically sealed, closed capsule, when the exit area of such capsule is sufficiently pressed against the lid piercing means under the influence of the pressure of the fluid and/or beverage in the capsule for creating at least one exit opening through which the beverage can drain from said hermetically sealed capsule. In case the capsule according to the invention is used in such an apparatus, the foil with exit openings and the filter layer provided between said foil and the roast and ground coffee provided inside the capsule body will stay in tact. However, the lid may deform against the lid piercing means. Consequently, the roast and ground particles will remain inside the capsule during brewing and during removing of the capsule from the apparatus after finishing of the beverage. To be able to retain the fines before reaching the exit openings of the foil, the filter layer may have an air permeability of 0-2000 mm/second measured at a pressure of approximately 200 Pascal. By means of the system the beverage prepared in a cup, for example about 35-50vml, having a cylindrical inner space with a diameter of 6 cm comprises a crema layer with a height R mm wherein R lays within the range of 2-16, preferably within the range of 4-12, and more preferably within the range of 5-8.5.

The invention also relates to a method for preparing a predetermined quantity of beverage suitable for consumption using an extractable product, using a system (1) according to invention and/or an exchangeable capsule (2) according to the invention.

The invention will now be further elucidated by means of, nonlimiting, examples referring to the drawing, in which
Fig. 1 shows an example of a system with a capsule for preparing a beverage according to a first embodiment of the invention;
Fig. 2 shows a second example of a system with a capsule according to a second embodiment of the invention;
Fig. 3 shows a third embodiment of the capsule according to the invention;
Fig. 4 shows an example of the filter layer of a capsule according to the invention;
Fig. 5 shows another example of the filter layer of a capsule according to the invention;
Fig. 6 shows a further example of the filter layer of a capsule according to the invention;
Fig. 7 shows another example of the filter layer of a capsule according to the invention;
Fig. 8 also shows an example of the filter layer of a capsule according to the invention;
Fig. 9 shows an alternative example of the additional filter layer of a capsule according to the invention;
Fig. 10A shows a schematic cross section view of a capsule according to the invention;
Fig. 10B shows a schematic view from inside the capsule of Fig. 10A viewed in a direction B;
Fig. 11A shows a schematic cross section view of a capsule according to the invention;
Fig. 11B shows a schematic view from inside the capsule of Fig. 11A viewed in a direction B;
Fig. 12A shows a schematic cross section view of a capsule according to the invention;
Fig. 12B shows a schematic view from inside the capsule of Fig. 12A viewed in a direction B;
Fig. 13A shows a schematic cross section view of a capsule according to the invention;
Fig. 13B shows a schematic view from inside the capsule of Fig. 13A viewed in a direction B;
Fig. 14A shows a schematic cross section view of a capsule according to the invention;
Fig. 14B shows a schematic view from inside the capsule of Fig. 14A viewed in a direction B;
Fig. 15A shows a schematic cross section view of a capsule according to the invention; and
Fig. 15B shows a schematic view from inside the capsule of Fig. 15A viewed in a direction B.

It is noted that identical or corresponding elements in the different drawings are indicated with identical or corresponding reference numerals. The exemplary embodiments shown should not be construed to be limitative in any manner and serve merely as illustration.

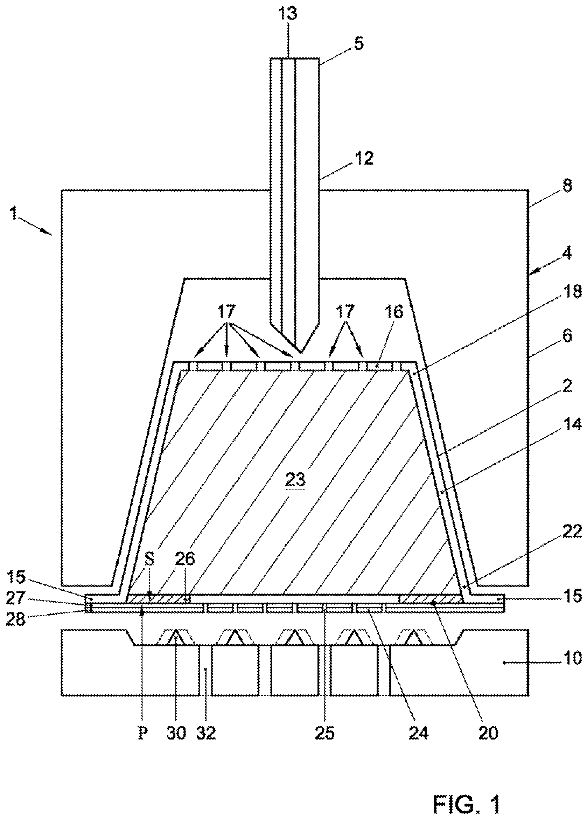

Figure 1 shows an example of a first embodiment of a system 1 for preparing a predetermined quantity of beverage suitable for consumption using an extractable product according to the invention. The system 1 comprises an exchangeable capsule 2 and an apparatus 4. The apparatus 4 comprises a receptacle 6 for holding the exchangeable capsule 2. In Figure 1, a gap is drawn between the capsule 2 and the receptacle 6 for clarity. It will be appreciated that, in use, the capsule 2 may lie in contact with the receptacle 6. In this example the receptacle 6 has a shape at least partly complementary to the shape of the capsule 2. In this example the receptacle 6 comprises an upper part 8 and a support surface 10. The apparatus 4 further comprises lid piercing means 30 that are provided for piercing a lid of a hermetically sealed capsule when the pressure inside the capsule 2 is built up high enough. The apparatus 4 also comprises a fluid dispensing device 5 for supplying an amount of a fluid, such as hot water, under a high pressure to the exchangeable capsule 2. The fluid dispensing device 5 is operatively connected to bottom piercing means 12 that are also intended for piercing a hermetically sealed capsule. In Figure 1, the bottom piercing means 12 are shown in an extended position. Since the capsule 2 according to the invention is an open capsule that need not be pierced, the end of the bottom piercing means 12 is positioned at a short distance from the capsule 2. However, in an alternative embodiment of the invention, the fluid dispensing device 5 may comprise a fluid supply that extends adjacent the bottom piercing means 12 into the receptacle inner space. With such a construction, the fluid is supplied to the inner space of the receptacle 6 above the capsule instead of via the bottom piercing means. In a further embodiment, the capsule 2 may comprise a closed bottom that in use is pierced by the lid piercing means 12 to provide a supply opening in the capsule such that the fluid can enter the capsule and come into contact with the extractable product.

In the system 1 shown in Figure 1, the exchangeable open capsule 2 according to the invention comprises a circumferential wall 14, a bottom 16 closing the circumferential wall 14 at a first end 18, and a lid 20 closing the circumferential wall 14 at a second end 22 opposite the bottom 16. The circumferential wall 14, the bottom 16 and the lid 20 enclose an inner space 23 comprising the beverage ingredient such as roast and ground coffee. The capsule body may be filled with approximately 4-11 grams, preferably 5-8 grams, more preferably 5.3-6 grams of roast and ground coffee. The average particle size may be between 100-1000µm, preferably between 200-750µm, more preferably between 250-500µm. The capsule may be suitable for preparing a single portion of the beverage, preferably a single cup of the beverage, e.g. 20 ml- 30 ml excluding 30 ml or 30-200ml of the prepared beverage. Dependent on the desired strength of the prepared beverage the amount of extractable product may vary. For preparing a cup of coffee, the capsule 2 may have an inner space 23 of approximately 11-18 ml. For instance, the inner space 24 may have a volume of approximately 12 ml. To be suitable for preparation of different kinds of coffee, the capsule 2 may comprise an amount of roast and ground coffee with a density of 0.278 gr/cm³ - 0.5 gr/cm³, preferably a density of 0.313gr/cm³ - -0.455 gr/cm³, more preferably a density of 0.357gr/cm³ - 0.434gr/cm³, most preferably a density of 0.379gr/cm³ - -0.416 gr/cm³. The pouring volume of the roast and ground coffee may be between 500-900cc/250gr, preferably between 550-800cc/250gr, more preferably between 575-700cc/250gr, most preferably between 600-660cc/250gr coffee. According to a further embodiment of the invention, the roast and ground coffee may comprise an average particle size of 100-1000µm, preferably an average particle size of 200-750µm, more preferably an average particle size of 250-500µm. With such an average particle size a coffee with a relatively large amount of dry matter and thus a good quality is obtained.

In the example of Figure 1, the circumferential first wall 14 is substantially rigid. The circumferential first wall 14 may e.g. comprise a plastics material and may be formed by e.g. injection moulding, vacuum-forming, thermoforming or the like. In this example the bottom 16 is integral with the circumferential first wall 14. In this example the second wall 16 is substantially rigid and comprises a plurality of entrance openings 17, possibly slits, for allowing the fluid to enter the capsule 2. The bottom 16 provides an entrance filter of the capsule 2.

The lid 20 of the capsule 2 comprises a multilayer foil 24 with a plurality of exit openings 25, through which the beverage can drain from the capsule 2. The multilayer foil 24 comprises two layers 27, 28. The two layers 27, 28 are bonded together so they can act on each other and/or strengthen each other. A physical and/or a chemical bond may be provided over approximately the entire surface of the layers. In this example, the first layer 27 has a higher tear strength than the second layer 28, and the second layer 28 has a higher stiffness than the first layer 27. The stiffness and the tear strength of the layers 27, 28 is such that the layers bonded together will not tear, rupture or deform too much such that the multilayer foil 24 may have a relatively constant flow resistance for a pressure built up in the capsule 2, which may thus become more reproducible and/or more controllable. The first layer 27 preferably comprises a layer of polyethylene terephthalate (PET-P) and the second layer 28 preferably comprises a layer of co-polymer polypropylene (CPP). The first layer 27 of PET-P has a thickness of approximately 15µm and the second layer 28 of CPP has a thickness of approximately 30µm. The exit area of the multilayer foil 24 preferably comprises 50-250 openings 25, preferably 70-190, more preferably 100-160 openings, wherein an average opening diameter may be between 0.1mm and 0.5 mm. Thus, the fluid can drain from the capsule 2 over a large area. Hence, a very homogeneous drain of beverage from the extractable product is obtained. Thus, the risk of occurrence of preferential paths via which the fluid flows through the extractable product is greatly reduced.

In the example of Figure 1, the capsule 2 further comprises an outwardly extending rim 15 at the second end 22, wherein the lid 20 is attached to the outwardly extending rim 15, e.g. by gluing, welding or the like. Hence, in this example the multilayer foil 24, is attached to the outwardly extending rim 15.

Between the extractable product in the inner space 23 of the capsule 2 and the multilayer foil 24 a substantially sheet shaped filter layer 26 is provided According to a first aspect of the invention, the substantially sheet shaped filter layer 26 does not cover any of the exit openings 25 in the foil 24. This is depicted in Figure 1. The filter layer 26 may be a layer of paper filtering material or a layer of non-woven material. The filter layer 26 may catch the smallest particles of the roast and ground coffee, i.e. the fines contained in the inner space 23. The fines will spread in the filter layer 26 before said particles will reach the exit openings 25 in the foil 24. Since at least not all fines will reach the exit openings, a desired flow restriction, thus not restricting the water flow too much, is obtained. Additionally, without wishing to be bound by any theory, the applicant has found that the filter layer 26 may also establish a preferred flow and/or allow a preferred flow to flow through the filter layer 26. During brewing, the filter layer 26 has a lower flow resistance than the compacted bed of coffee inside the capsule 2 in an area adjacent to the foil 24. It is noted a preferred path through the filter layer may include a preferred path extending parallel to the circumferential wall as well as a preferred path extending radially inward from the circumferential wall parallel to the foil. A preferred flow may also positively influences the brewing time of a beverage. Also excessive compression of the coffee bed is minimized. Thus brewing time is improved.. Therefore, the filter layer 26 may be of paper filtering material having a weight of approximately 1-250 grams/m2, more preferably between 10-100 grams/m2, preferably approximately 15-50 grams/m2. Alternatively, the filter layer 26 may be of a non-woven or woven material, such as a synthetic material like for instance high density polyethylene (HDPE). In an example of the capsule, the material of the filter layer may be calendered. The filter layer 26 may comprise a fine structured network of fibers and/or meshes. An example of such a material may be Tyvek. In a different embodiment, the filter layer may comprise a screen, for instance a plastic or metal screen. Such a material layer may comprise a similar thickness and weight as above indicated with the paper filtering material. To be able to retain the fines before reaching the exit openings 25 of the multilayer foil 24, the filter layer 26 may have an air permeability of 0-550 or 550-2000 excluding 500 mm/second measured at a pressure of approximately 200 Pascal. As is visible in Figure 1, the filter layer 26 extends substantially parallel to the multilayer foil 24 and does not cover any of the exit openings 25 provided in the multilayer foil 24.

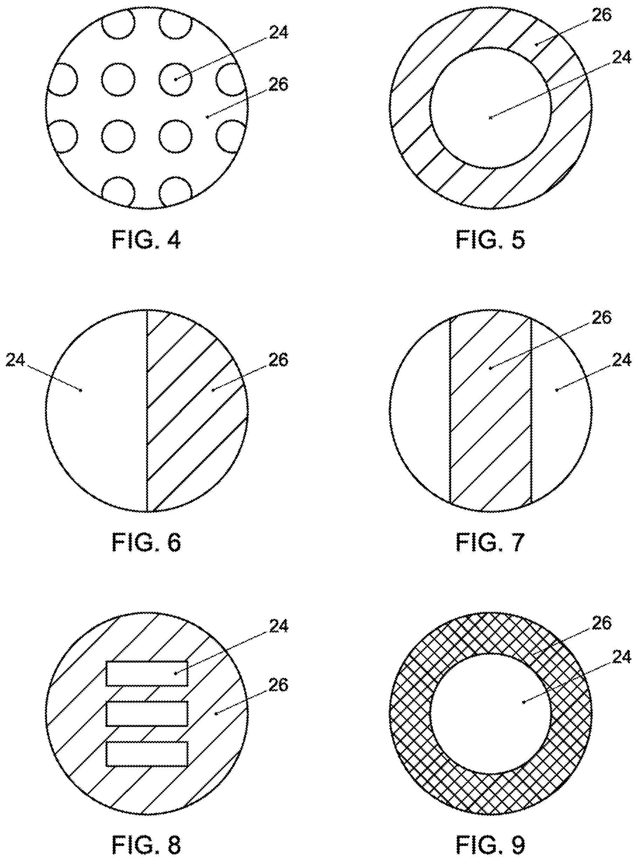

In order not to cover any of the exit openings 25, the filter layer may for instance comprise an opening provided in the central area of the filter layer (see for instance Figure 5). This is the case in the capsule 2 according to Figure 1. A first surface P of the filter layer 26 may abut against the multilayer foil 24, at least to a surface S opposing the filter layer 26 and may be pressed between the roast and ground coffee and the multilayer foil 24 to keep the filter layer 26 in place. In this case, the filter layer 26 in not connected to other parts of the capsule 2. Alternatively, the filter layer 26 may be connected to the multilayer foil 24 along the entire surface S thereof. The filter layer 26 may for instance be sealed to the multilayer foil 24 or glued. To enhance the sealing properties between said filter layer 26 and the multilayer foil 24, the filter layer 26 may be provided with polyethylene (PE). Instead of connecting the filter layer 26 along its entire surface to the multilayer foil 24, only the circumferential edge of the filter layer 26 may be connected to the multilayer foil 24.

The combination of the multilayer foil 24 and the filter layer 26 prevents extractable product from leaving the capsule 2 for instance during or after preparing of the beverage or during removing of the used capsule 2 from the apparatus 4, thereby preventing soiling of the apparatus 4 and at the same time preventing fines entering the container together with the prepared beverage.

The multilayer foil 24 is arranged to having sufficiently high tear strength not to be pierced by the lid piercing means 30 under the influence of the pressure inside the capsule 2. The filter layer 26 may be configured to contribute to the strength of the lid 9.

Alternatively, or additionally, the multilayer foil 24 forms a sufficiently low flow resistance for the beverage exiting the capsule 2, such that the lid 20 is not pressed against the lid piercing means 30 with sufficient force to be pierced by the lid piercing means 30 and the lid 20 stays intact. More in general it applies that the multiple layer foil 24 and the lid piercing means 30 are adapted to each other such that the capsule 2, in use, is not pierced by the lid piercing means 30 and the lid 20 stays intact. Since the multilayer foil 24 stays intact, also the filter layer 26 will stay intact. It will be appreciated that the lid 20 however may deform against the lid piercing means 30.

The system 1 shown in Figure 1 is operated as follows for preparing a cup of coffee.

The capsule 2 is placed in the receptacle 6. The lid 20 is brought into abutment with the support surface 10. The fluid, here hot water under pressure, is supplied from the fluid dispensing device 5, via the bore 13 in the bottom piercing means 12, to the extractable product in the inner space 23 through the entrance openings 17 provided in the bottom 16 of the capsule 2. In a different embodiment (not shown) the water may be supplied via a water supply that is arranged separately from the bottom piercing means 12. The hot water may be supplied to the roast and ground coffee under a pressure of approximately 4-20 bars, preferably 9-15 bars. The water will wet the coffee grounds and extract the desired substances to form the coffee beverage. The prepared coffee will drain from the capsule 2 through the lid 20 comprising the multilayer foil 24 and the filter layer 26. The coffee beverage is further drained from the receptacle 6 via a plurality of outlets 32, and may be supplied to a container (not shown) such as a cup. During the supply of the water to the roast and ground coffee in the inner space 23 of the capsule 2, coffee particles are redistributed in the inner space 24 of the capsule 2. The relatively small particles, i.e. the fines, are displaced together with the water towards the lid 20 and some fines will be caught by the filter layer 26 and spread in said layer 26. Consequently, accumulation at the exit openings 25 by said fines is reduced.. Additionally, it is believed that a preferred flow, which has formed along the circumferential wall 14 may enter the filter layer 26 because the flow resistance through the filter layer 26 is preferably 10-30 times smaller than the flow resistance through the compacted roasted ground coffee product. The preferred flow may continue flowing in an inwardly radial direction and exit the capsule 2 through the exit openings 25 provided in foil 24. Thus brewing time is improved.

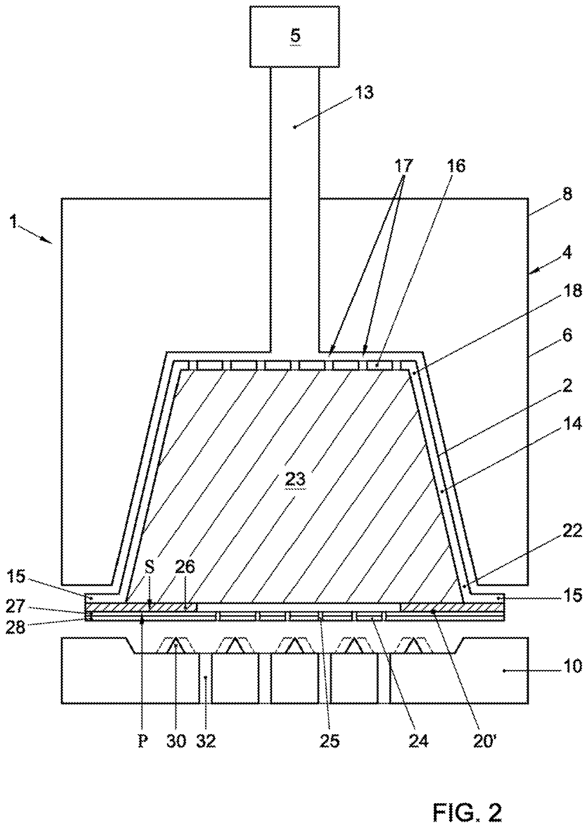

In Figure 2 another example of a system 1 comprising a capsule 2 according to a second embodiment of the invention is shown. For the sake of clarity only the differences with respect to the system 1 according to the first example will be discussed. The apparatus 4 of the system 1 according to Figure 2 does not comprise bottom piercing means 12. In use, fluid is supplied from the fluid dispensing device 5 via a supply opening 13 to the entrance openings 17 provided in the bottom 16 of the capsule 2. In the example of Figure 2 the plurality of entrance openings 17 is distributed over substantially the entire bottom 16. Thus, the fluid is supplied to the extractable product via the plurality of entrance openings 17, which causes the extractable product to be wetted over substantially the entire cross section of the capsule 2. Hence, a very homogeneous supply of fluid to the extractable product is obtained.

The capsule 2 according to the second embodiment of the invention only differs with respect to the capsule 2 of the first embodiment in that the lid 20' has a different construction. The filter layer 26 does not cover any of the exit openings 25 in the foil 24.The filter layer 26, comprising an opening provided in the central area of the filter layer (see for instance Figure 5) has substantially the same outer diameter as the multilayer foil 24 of the lid. The filter layer 26 is connected, with the circumferential edge thereof, to the rim 15, at least to the surface of the rim 15 facing the lid 20'. To be able to seal the filter layer 26 directly to the rim 15, the filter layer 26 may comprise plastic, such as PE content. Alternatively, the filter layer 26 may be coated. The multilayer foil 24 may be sealed against the filter layer 26, either along the entire surface or only along the circumferential edge. If the filter material of the filter layer 26 is thin enough, melting the multilayer foil 24 and the rim 15 together, will suffice to enable keeping the filter layer 26 in place. In that case the filter material of the filter layer 26 does not have to comprise the additional sealing properties such as plastic or a coating.

It will be appreciated that in other not shown embodiments of the system, the apparatus may be different than the apparatus as described in the first or second example of the system according to the invention. For instance, the apparatus can be provided with a hollow space between the lid 20 of the capsule 2 and the outlet openings 28 of the apparatus 4. Also the lid piercing means 30 may be omitted. Thus it is noted that the capsule according to the invention can be used in any suitable apparatus for preparing a beverage by using high pressure.

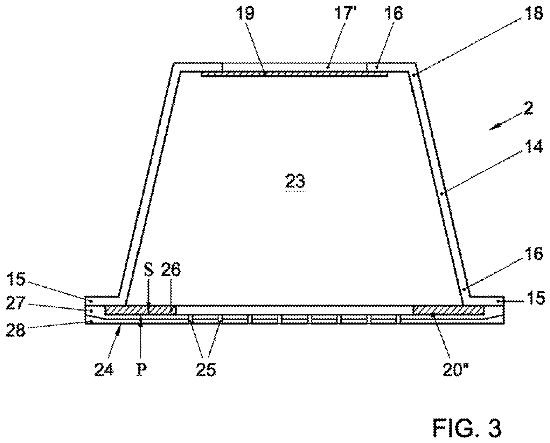

In Figures 3 a further embodiment of the capsule 2 according to the invention is shown. The capsule 2 may be used in an apparatus 4 as shown in Figure 1 or an apparatus 4 as shown in Figure 2 or any other suitable apparatus.

The capsule 2 in Figure 3 differs from the capsules 2 in Figures 1 and 2 in that the bottom 16 and the lid 20'" are configured differently. For the sake of clarity only the differences will be discussed here in detail. The description of the features that have been described before with reference to Figures 1 and/or 2 is omitted here.

The lid 20" of the capsule 2 as shown in Figure 3 comprises a multilayer foil 24 with the first material layer 27 and the second material layer 28. The filter layer 26 comprises a filtering paper, comprising an opening provided in the central area of the filter layer (see for instance Figure 5), that is positioned between the roast and ground coffee provided in the inner space 23 of the capsule 2 and the multilayer foil 24. The circumferential edge of the filter layer 26 is enclosed between the lid 20" and the outwardly extending rim 15. The filter layer 26 may remain in the desired position by means of the seal that connects the lid 20" to the rim 15 at an outer part of the rim 15. The entrance filter 19 comprises a porous sheet, for instance of filter paper, that is connected to the bottom 16 to extend along the bottom opening 17'. The entrance filter is connected to the circumferential edge of the bottom 16 of the capsule 2.

Figures 4-9 show further examples of filter layers 26 that may be provided on top of the respective flexible foil layer, such as the multilayer foil 24. Such a filter layer 26 may be comprised in a capsule 2 according to the invention. In Figure 4 a paper or non-woven filter layer is shown that comprises multiple substantially circular holes. Exit openings provided in the foil 24 correspond to the substantially circular holes such that when the filter layer 26 is placed between the foil 24 and the extractable product contained in the inner space none of the exit openings are covered by the filter layer 26. Thus the material that extends in between the respective holes does not cover any of the exit openings 25 in the foil 24 of the capsule 2.

In Figure 5, the filter layer 26 may comprise a single opening that preferably is located above a centre area of the foil 24. In this embodiment, as the capsules 2 described in Figures 1-3, when the filter layer 26 is placed between the foil 24 and the extractable product contained in the inner space none of the exit openings are coved by the filter layer 26. In Figure 6, the filter layer 26 covers approximately half of the flexible foil 24. Exit opens may be provided on the other half of the flexible foil 24 not covered by the filter layer 26. This also holds for the example of the foil layer 26 as shown in Figure 7. The filter layer 26 may be formed out of an elongate strip of filter layer material. Figure 8 shows a filter layer 26 having openings with a substantially rectangular shape. According to the invention, the exit openings in the foil 24 correspond to the openings of the filter layer 26, such that when the filter layer 26 is placed between the foil 24 and the extractable product contained in the inner space none of the exit openings are coved by the filter layer 26. In other examples, the openings may have other shapes such as triangular openings. The filter layers 26 as shown in Figures 4-8 may for instance be of paper or non woven material. In Figure 9, the filter layer 26 is has a similar shape to that of the filter layer 26 depicted in Figure 5 and is of a gauze having a multitude of small openings.

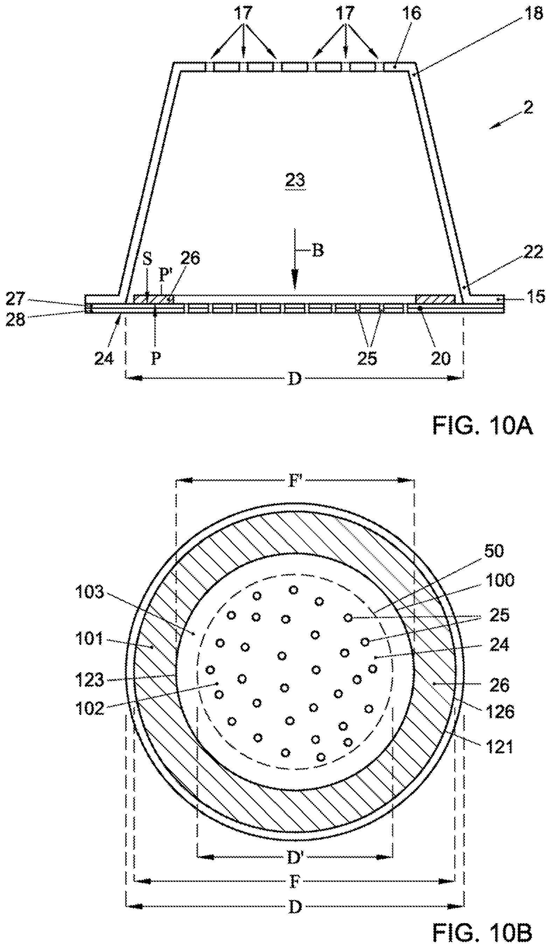

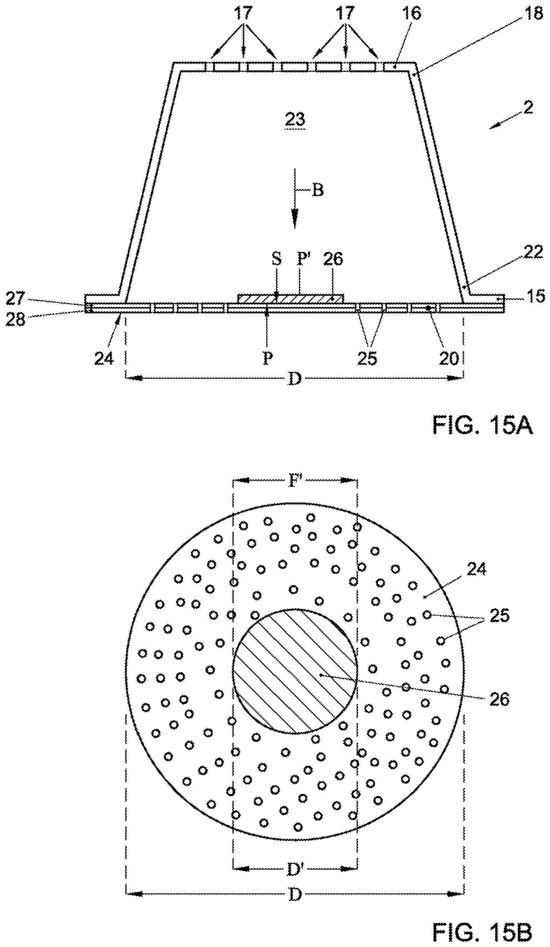

In Figures 10A/B-15A/B, different embodiments of the capsules 2 according to the invention are shown. In each of the capsules 2, the substantially sheet shaped filter layer 26 does not cover any of the exit openings 25 in the foil 24. This means that each opening is completely uncovered by the filter layer 26.

The capsules 2 of Figures 10A/B-15A/B may be brewed using an apparatus similar to the apparatus 4 described in reference to Figure 1, resulting in a coffee beverage. Hot water is supplied to the capsule from the fluid dispensing device 5 to the extractable product in the inner space 23 through the entrance openings 17, possibly slits, provided in the bottom 16 of the capsule 22P. The hot water was supplied at an average temperature of 92-98 degrees Celsius and preferably is supplied to the capsules under an average pressure of 14-16 bar. The prepared coffee may be drained from the capsule 2 through the lid 20. The coffee beverage may be further drained from the receptacle 6 via a plurality of outlets 32, into for example a container such as a cup. During the supply of the water to the roast and ground coffee in the inner space 23 of the capsule 2, coffee particles are redistributed in the inner space 23 of the capsule 2. The relatively small particles, i.e. the fines, are displaced together with the water towards the lid 20.

The brewing properties of the beverage brewed by the capsule may be measured. Brewing time is measured in seconds. The crema layer of the beverage is measured in millimetres, and the amount of dry matter (DMA) is measured in g/100 g and is expressed in percent.

In Figures 10A-15A, a capsule 2 is shown. In the Figures 10B-15B, the surface area of that part of the foil 24 which forms a boundary of the inner space 23 of the respective capsule is shown viewed in a direction B indicated in Figures 10A-15A, respectively. The second open end 22 of the capsule 2 has a diameter D, in these examples equal to 29mm. The surface area of the foil 24 seen in a direction B and defined by the second open end 22 of the capsule has a diameter D which corresponds to the diameter of the inner space 23 of the capsule 2 at the second open end 22 of the capsule 2 measured along the foil 24. In all the capsules 2 shown in Figures 10A/B-15A/B an exit opening has a diameter of 300 µm. Furthermore, the inner space 23 of the capsules 2 of Figures 10A/B - 15A/B have a volume of approximately 12 ml.

Figure 10A shows a capsule 2 according to the invention. In the area adjacent to the foil 24, a filter layer 26 is provided. The filter layer 26 is positioned between the extractable product in the inner space 23 and the lid 20, which comprises a multilayer foil 24 with a plurality of exit openings 25. In this example, the multilayer foil 24 has 141 exit openings 25 distributed in a pattern within an area defined by a circle 50 having a diameter of D' equal to 22.5 mm. The circle 50 is concentric with the surface area of the foil 24 defined by the second open end 22.

The filter layer 26, in this example, is ring-shaped and comprises one opening 100. The outer diameter F is equal to 28.5 mm, and the inner diameter F' is equal to 24 mm. As the outer diameter is slightly smaller than the inner diameter D of the capsule 2 at the second open end 22, the filter 26 may be placed in the capsule 2 between the extractable product in the inner space 23 and foil 24. In this case the outer diameter of the filter F, is approximately 2% smaller than the inner diameter D of the capsule 2 at the second open end 22 measured along the foil 24. The filter layer 26 is formed from filter paper having a density of 22 g/m2, an air permeability of 517 mm/s at 200Pa and a thickness of 0.1 mm.

As the inner diameter F' of the filter is larger than 22.5mm none of the exit openings 25 are covered by the filter layer 26. The plurality of exit openings 25 directly face the extractable product contained in the inner space 23. The first surface P of the filter layer 26 abuts against the multilayer foil 24, at least to the surface S opposing the filter layer 26 and may be pressed between the roast and ground coffee and the multilayer foil 24 to keep the filter layer 26 in place. A second surface P' of the filter layer 26, which is opposite the first surface P of the filter layer 26, directly faces the extractable product contained in the inner space 23.

The surface of the foil 24 which is not covered by the filter layer 26 comprises 72% of the total surface area of the foil 24 which forms a boundary of the inner space 23 of the capsule 2. The surface area of the foil 24 which is not covered by the filter layer 26 and which is provided with the exit openings 25 is 60% of the total surface area of the foil 24 which forms a boundary of the inner space 23 of the capsule 2. In this example, the surface area of the foil which is not covered by the filter layer and which is provided with the exit openings is f*72% wherein f is 0.83.
In this example the full outer boundary 126 of the filter layer 26, which is an outer circumferential boundary of the ring-shaped of the filter layer 26, extends to the circumferential wall 14 of the capsule 2. Therefore a first portion 101 of the surface area of the foil 24 which is covered by the filter layer 26 lays at least substantially completely adjacent the circumferential wall 14. It will be appreciated that adjacent to the circumferential wall, measured along the surface area of the foil 24 which forms a boundary of the inner space 23 of the capsule 2, is understood to be at a distance smaller than 3% of the diameter of the surface area of the foil 24 which forms a boundary of the inner space 23 of the capsule 2 at the second open end 22. As the outer diameter F of the ring-shaped filter layer 26 is equal to 28.5 mm, the outer boundary 126 of the filter layer 26 is within 3% of the diameter D. Furthermore, 100% of an outer boundary 121 of the first portion 101 of the foil 24 lays adjacent to the circumferential wall 14. The outer boundary 121 of the first portion 101 of the foil coincides with the outer boundary 126 of the filter layer 26. Therefore the filter layer 26 extends to each position of the circumferential wall 14 adjacent the foil 24.

As the inner diameter F' of the filter layer 26 is 24 mm and the diameter of the exit openings 25 is approximately 300µm, the opening 100 of the filter layer 26 has a surface area which is greater than a surface area of an exit opening 25 having the largest surface area. Additionally, the centre opening 100 of the ring-shaped filter layer 26 has a largest diameter F', in this example 24 mm, which is approximately 83% of D. D is the inner diameter of the capsule 2 at the second open end 22.

A second portion 102 of the surface area of the foil 24 wherein the plurality of exit openings 25 are distributed lays at least substantially completely at a distance from the circumferential wall. In this example, the 141 exit openings 25 are distributed within the area defined by a circle 50 having a diameter of D' equal to 22.5 mm. As the circle 50 is concentric with the surface area of the foil 24 defined by the second open end 22, the exit openings are at least D/2-D'/2, or 3.25 mm from the circumferential wall 14 measured along the surface area of the foil 24.

Additionally, a third portion 103 of the surface area of the foil 24 which is not covered by the filter layer 26 lays at least substantially completely at a distance from the circumferential wall 14. In this example 100%, of a outer circumferential boundary 123 of the third portion 103 of the surface are of the foil 24 lays at a distance from the circumferential wall 14. Here the third portion is an island. Furthermore, the filter layer 26 is substantially centred on the foil 24 such that a centre of the filter layer 26 coincides with a centre of the part of the foil 24 which forms a boundary of the inner space 23 at the second open end 22.

When the capsule 2 is brewed, coffee particles inside the capsule may move towards the foil 24 during supply of the fluid inside the capsule. The filter layer 26 between the extractable product, i.e. roast and ground coffee, and the foil, catches some of the fines in the coffee. In this way, at least not all fines will reach the exit openings 25, while a flow restriction is still formed. Additionally, it is believed that a preferred flow, which has formed along the circumferential wall 14 may enter the filter layer 26 covering the first portion 101 of the foil 24, because the flow resistance through the filter layer 26 is approximately estimated by modelling 20 times smaller than the flow resistance through the compacted roasted ground coffee product. The preferred flow may continue flowing in an inwardly radial direction towards the third portion 103 of the surface area of the foil 24 and exit the capsule 2 through the exit openings 25 provided in the second portion 102 of the surface area of the foil 24. Thus brewing time is improved.

In this example, the inner space 23 of the capsule 2 is filled with 5.8 gm of ground roasted Profondo coffee. The coffee has a pouring volume of 705-710 ml/250g, a particle density X50 of 262.21 µm, and a particle density X10 of 40.34 µm. The percentage of fines, i.e. particles smaller than 100 µm is 20.22%. With capsules filled with coffee having the above properties, the brewing time for a lungo coffee was between 66-73 seconds. The crema layer was 5.8 mm -6.5 mm. DMA was between 1.44% and 1.46%.

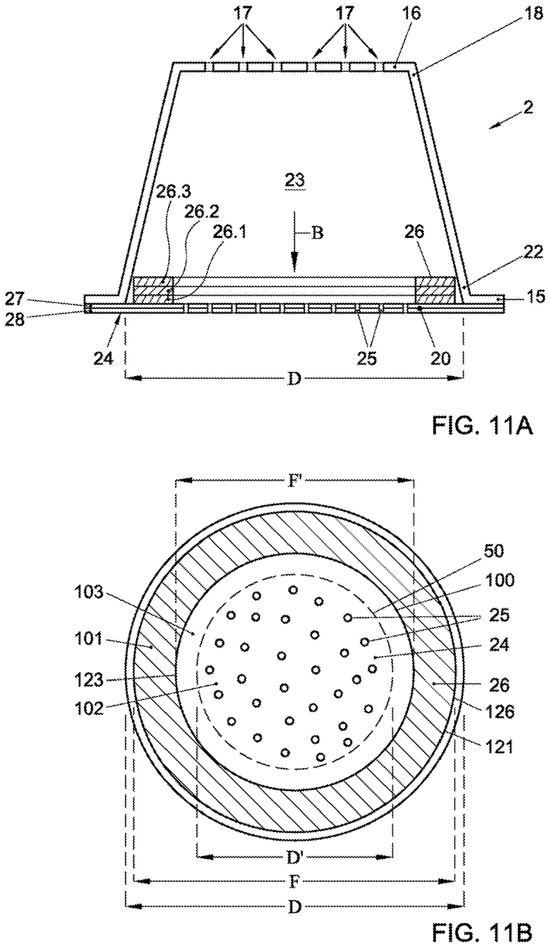

In Figure 11A/B a capsule 2 according to the invention similar to the capsule 2 of Figure 10A/B is shown. The capsule 2 of Figure 11A/B differs from the capsule 2 of Figure 10A/B in that the filter layer 26 of the capsule 2 of Figure 11A/B comprises 3 sub-layers 26.1-26.3. Each sub filter 26.i is sheet shaped, and also, in this example, each sub layer 26.i is ring-shaped. The ring has a 24 mm inner diameter, F', and an outer diameter F, is equal to 28.5 mm, which is approximately 2% smaller than the diameter D of the inner space 23 of the capsule measured along the inside surface of the foil 24. Furthermore, each sub layer 26.i is formed from filter paper having a density of 22 g/m2, and air permeability of 517 mm/s at 200Pa and a thickness of 0.1 mm.

Through stacking filter layer 26.i, the resulting filter layer 26 of the capsule 2 of Figure 11A/B provides 3 times more volume for a preferred path to flow through. In this example, the resulting filter layer 26 fills approximately 0.6% of the volume of the inner space 23 of the capsule 2. The capsule 2 using a filter layer 26 comprising sub layer 26.i has also shown a reliable reduction of brewing time, relatively high DMA percentages, and an acceptable crema layer.

It is also conceivable that the filter layer 26 in the capsules 2 according to the invention is formed from a non-woven material. For example a 300 µm thick non-woven mesh filter layer 26 with a ring-shape having an inner diameter F' of 24 mm fills approximately 4.6% of the volume of the inner space of the capsule 23. In this example, the volume of the inner space 23 is 12 ml. By reserving an volume of the inner space of the capsule which is filled by the filter layer 23 provides, in use, a volume of the capsule in which a preferred flow may be established and/or through which a preferred flow may flow. Preferably, as in this example, a flow resistance of the filter layer 26 is 10-30 times smaller than a flow resistance of the extractable product in the inner space 23, when being extracted with a fluid under a pressure of 4-20 bar and preferably 9-18 bar.

Figure 12A shows a capsule 2 according to the invention. In the area adjacent to the foil 24, a filter layer 26 is provided. The filter layer 26 is positioned between the extractable product in the inner space 23 and the lid 20, which comprises a multilayer foil 24 with a plurality of exit openings 25. In this example, the multilayer foil 24 has 141 exit openings 25 distributed in a pattern within an area defined by a circle 50 having a diameter of D', 22.5 mm. The circle 50 is concentric with the surface area of the foil 24 defined by the second open end 22.

The filter layer 26, in this example, comprises one opening 100 which is shaped as the DE-brand. The outer diameter F is equal to D, which is the inner diameter of the capsule 2 at the second open end 22. The filter 26 is placed in the capsule 2 between the extractable product in the inner space 23 and the foil 24. The filter layer is formed from filter paper having a density of 22 g/m2, an air permeability of 517 mm/s at 200Pa and a thickness of 0.1 mm.

In this example, the smallest inner diameter F' of the filter is 23 mm and is therefore larger than the 22.5 mm circle in which the exit openings 25 are distributed. Therefore none of the exit openings 25 are covered by the filter layer 26. The plurality of exit openings 25 directly face the extractable product contained in the inner space 23.

The surface of the foil 24 which is not covered by the filter layer 26 comprises at least 63% of the total surface area of the foil 24 which forms a boundary of the inner space 23 of the capsule 2. The surface area of the foil 24 which is not covered by the filter layer 26 and which is provided with the exit openings 25 is 60% of the total surface area of the foil 24 which forms a boundary of the inner space 23 of the capsule 2. In this example, the surface area of the foil which is not covered by the filter layer and which is provided with the exit openings is f*63% wherein f is 0.95.

In this example the full outer boundary 126 of the filter layer 26 extends to the circumferential wall 14 of the capsule 2. Therefore a first portion 101 of the surface area of the foil 24 which is covered by the filter layer 26 lays at least substantially completely adjacent the circumferential wall 14. Furthermore, 100% of an outer boundary 121 of the first portion 101 of the foil 24 lays adjacent to the circumferential wall 14. The outer boundary 121 of the first portion 101 of the foil coincides with the outer boundary 126 of the filter layer 26. Therefore the filter layer 26 extends to each position of the circumferential wall 14 adjacent the foil 24.

The inner diameter F' is at least 23 mm, and therefore the area of the opening 100 of the filter layer 26 has a surface area which is greater than a surface area of an exit opening 25 having the largest surface area.

A second portion 102 of the surface area of the foil 24 wherein the plurality of exit openings 25 are distributed lays at least substantially completely at a distance from the circumferential wall because the exit openings 25 are distributed within the area defined by a circle 50 concentric with the surface area of the foil 24 defined by the second open end 22 and having a diameter of D' equal to 22.5 mm.

Additionally, a third portion 103 of the surface area of the foil 24 which is not covered by the filter layer 26 lays at least substantially completely at a distance from the circumferential wall 14. In this example 100%, of a outer circumferential boundary 123 of the third portion of the surface are of the foil 24 lays at a distance from the circumferential wall 14. The outer boundary 123 of the third portion is shaped as the DE-brand.

Owing to the similarities of the filter layer 26 of the capsule 2 of Figure 12A/B to the filter layer 26 of the capsule 2 of Figure 11A/B similar brewing properties were achieved. It is noted that the filter layer 26 allows the properties of the extractable product to be varied. Hence providing the appropriate filter may allow for additional ground roasted coffee to be brewed.

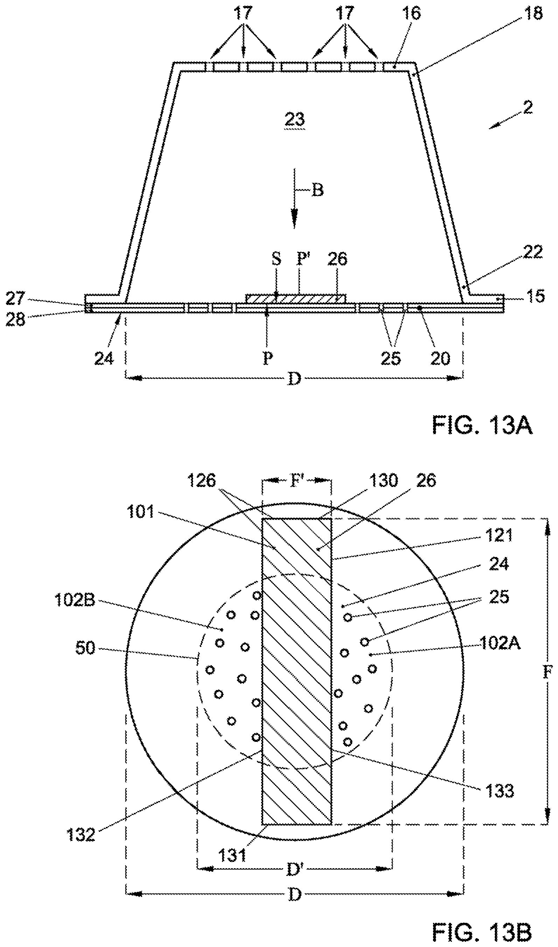

A capsule 2 according to the invention is shown in Figure 13A. In the area adjacent to the foil 24 a filter layer 26 is provided. The filter layer 26 is positioned between the extractable product in the inner space 23 and the lid 20. The filter layer 26, in this example, is a strip. The width F' of the filter layer 26 is 6mm and the length F of the filter layer strip 26 is 28.5 mm. The filter layer is formed from filter paper having a density of 22 g/m2, an air permeability of 517 mm/s at 200Pa and a thickness of 0.1 mm. The strip-shaped filter layer 26 is provided with two opposite ends 130, 131 laying adjacent the circumferential wall and two opposite sides 132, 133 each laying at a distance from the circumferential wall.

In this example, the multilayer foil 24 has 100 exit openings 25 distributed in a pattern within an area defined by a circle 50 and excluding the surface area of the foil 24 covered by the strip-shaped filter layer 26. In this way none of the exit openings 25 are coved by the filter layer 26. The diameter of the circle 50 is D', which is equal 22.5 mm. The circle 50 is concentric with the surface area of the foil 24 defined by the second open end 22.

The plurality of exit openings 25 directly face the extractable product contained in the inner space 23. The first surface P of the filter layer 26 abuts against the multilayer foil 24, at least to the surface S opposing the filter layer 26 and may be pressed between the roast and ground coffee and the multilayer foil 24 to keep the filter layer 26 in place. A second surface P' of the filter layer 26, which is opposite the first surface P of the filter layer 26, directly faces the extractable product contained in the inner space 23.

The surface of the foil 24 which is not covered by the filter layer 26 comprises approximately 74% of the total surface area of the foil 24 which forms a boundary of the inner space 23 of the capsule 2. The surface area of the foil 24 which is not covered by the filter layer 26 and which is provided with the exit openings 25 is approximately 45% of the total surface area of the foil 24 which forms a boundary of the inner space 23 of the capsule 2. In this example, the surface area of the foil which is not covered by the filter layer and which is provided with the exit openings is f*74% wherein f is approximately 0.61.

In this example, the two opposite ends 130, 131 of the strip-shaped filter lay adjacent to the circumferential wall 14 of the capsule 2. Therefore, the outer boundary 126 of the filter layer 26 extends to the circumferential wall 14 of the capsule 2. A first portion 101 of the surface area of the foil 24 which is covered by the filter layer 26 and lays at least substantially completely adjacent the circumferential wall 14. In this example, 17% of an outer boundary 126 of the filter layer lays adjacent to the circumferential wall 14.

A second portion of the surface area of the foil 24 wherein the plurality of exit openings 25 are distributed comprises two discrete portions 102A and 102B. Both second portions 102A/B lay at least substantially completely at a distance from the circumferential wall.

During brewing, coffee particles inside the capsule may move towards the foil 24 during supply of the fluid inside the capsule. The filter layer 26 between the extractable product, i.e. roast and ground coffee, and the foil 24, catches some of the fines in the coffee. As a result at least not all fines will reach the exit openings 25. Additionally, it is believed that a preferred flow, which has formed along the circumferential wall 14 may enter the filter layer 26 covering the first portion 101 of the foil 24 adjacent to the circumferential wall 14. Since the flow resistance through the filter layer 26 is approximately estimated by modelling 20 times smaller than the flow resistance through the compacted roasted ground coffee product. The preferred flow may continue flowing in an inwardly radial direction and eventually exit the capsule 2 through the exit openings 25 provided in the second portion 102 of the surface area of the foil 24.

The inner space 23 of the capsule 2 is filled with 5.8 gm of ground roasted Profondo coffee. The coffee has a pouring volume of 705-710 ml/250g, a particle density X50 of 262.21 µm, and a particle density X10 of 40.34 µm. The percentage of fines, i.e. particles smaller than 100 µm is 20.22%. With capsules filled with coffee having the above properties, the brewing time for a lungo coffee was more than 73 and less than 90 seconds. The crema layer was more 5.8 mm, and the DMA was more than 1.44%.

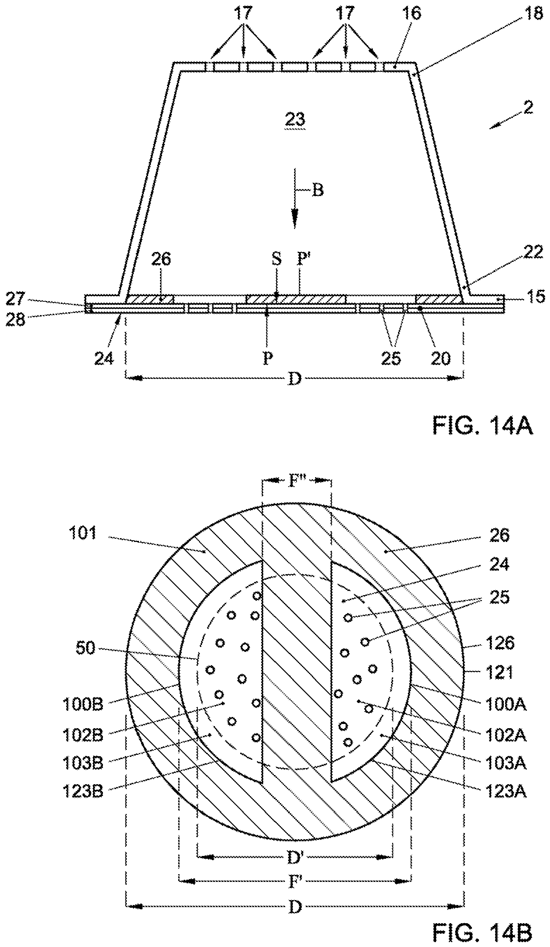

Another capsule 2 according to the invention is shown in Figure 14A. In the area adjacent to the foil 24, a filter layer 26 is provided. The filter layer 26 is positioned between the extractable product in the inner space 23 and the lid 20, which comprises a multilayer foil 24 with a plurality of exit openings 25. The filter layer 26, in this example, comprises a ring and a strip. The width F" of the strip portion of the filter layer 26 is 6mm and the ring has an inner diameter F' equal to 24 mm.

The filter layer is formed from filter paper having a density of 22 g/m2, an air permeability of 517 mm/s at 200Pa and a thickness of 0.1 mm.

In this example, the multilayer foil 24 has 100 exit openings 25 distributed in a pattern within an area defined by a circle 50 and excluding the surface area of the foil 24 covered by the strip-shaped portion of the filter layer 26. In this way none of the exit openings 25 are coved by the filter layer 26. The diameter of the circle 50 is D' is equal 22.5 mm and the circle 50 is concentric with the surface area of the foil 24 defined by the second open end 22.

The plurality of exit openings 25 directly face the extractable product contained in the inner space 23. The first surface P of the filter layer 26 abuts against the multilayer foil 24, at least to the surface S opposing the filter layer 26 and may be pressed between the roast and ground coffee and the multilayer foil 24 to keep the filter layer 26 in place. A second surface P' of the filter layer 26, which is opposite the first surface P of the filter layer 26, directly faces the extractable product contained in the inner space 23.

The surface of the foil 24 which is not covered by the filter layer 26 comprises approximately 52% of the total surface area of the foil 24 which forms a boundary of the inner space 23 of the capsule 2. The surface area of the foil 24 which is not covered by the filter layer 26 and which is provided with the exit openings 25 is 45% of the total surface area of the foil 24 which forms a boundary of the inner space 23 of the capsule 2. In this example, the surface area of the foil which is not covered by the filter layer and which is provided with the exit openings is f*52% wherein f is approximately 0.87.

In this example the full outer boundary 126 of the filter layer 26 extends to the circumferential wall 14 of the capsule 2. Additionally, the outer boundary 126 is an outer circumferential boundary. A first portion 101 of the surface area of the foil 24 which is covered by the filter layer 26 lays at least substantially completely adjacent the circumferential wall 14. Furthermore, 100% of an outer boundary 121 of the first portion 101 of the foil 24 lays adjacent to the circumferential wall 14. The outer boundary 121 of the first portion 101 of the foil coincides with the outer boundary 126 of the filter layer 26. Therefore the filter layer 26 extends to each position of the circumferential wall 14 adjacent the foil 24.

In this example, the filter layer 26 comprises a plurality of openings 100A and 100B. Therefore a second portion of the surface area of the foil 24 wherein the plurality of exit openings 25 are distributed comprises two discrete second portions 102A and 102B. Both second portions 102A/B lay at least substantially completely at a distance from the circumferential wall. Each opening 100A/B has a surface area which is greater than surface area of exit opening having the largest surface area.

Additionally, a third portion of the surface area of the foil 24 which is not covered by the filter layer 26 comprises two discrete third portions 103A and 103B. The third portions 103A/B lay at least substantially completely at a distance from the circumferential wall 14. In this example 100%, of both outer circumferential boundary 123A/B of the third portion 103A/B of the surface are of the foil 24 lay at a distance from the circumferential wall 14. Here the third portion is formed by two islands. Furthermore, the filter is substantially centred on the foil 24 such that a centre of the filter layer 26 coincides with a centre of the part of the foil 24 which forms a boundary of the inner space 23 at the second open end 22.

When brewing, coffee particles inside the capsule may move towards the foil 24 during supply of the fluid inside the capsule. The filter layer 26 between the extractable product, i.e. roast and ground coffee, and the foil 24, catches some of the fines in the coffee. As a result at least not all fines will reach the exit openings 25. In this example 100% the outer boundary 121 of the first portion 101 is adjacent to the circumferential wall 14 at the boundary formed by the foil 24 and the inner space 23. Therefore, it is believed that a preferred flow, which has formed along the circumferential wall 14 may enter the filter layer 26 covering the first portion 101 of the foil 24 adjacent to the circumferential wall 14. Since the flow resistance through the filter layer 26 is preferably estimated by modelling 20 times smaller than the flow resistance through the compacted roasted ground coffee product. The preferred flow may continue flowing in an inwardly radial direction and exit the capsule 2 through the exit openings 25 provided in the second portion 102 of the surface area of the foil 24.

Another capsule 2 according to the invention is shown in Figure 15A. In the area adjacent to the foil 24, a filter layer 26 is provided. The filter layer 26 has the shape of a disc. The disc-shaped filter layer 26 has a diameter F equal to, in this example, 18 mm. The filter layer is formed from filter paper having a density of 22 g/m2, an air permeability of 517 mm/s at 200Pa and a thickness of 0.1 mm.

In this example, the multilayer foil 24 has 90 exit openings 25 distributed in on the foil 24 outside an circle having a diameter D', which is in this embodiment equal to F, which is equal to 18mm.

The plurality of exit openings 25 directly face the extractable product contained in the inner space 23. The first surface P of the filter layer 26 abuts against the multilayer foil 24, at least to the surface S opposing the filter layer 26 and may be pressed between the roast and ground coffee and the multilayer foil 24 to keep the filter layer 26 in place. A second surface P' of the filter layer 26, which is opposite the first surface P of the filter layer 26, directly faces the extractable product contained in the inner space 23.

The surface of the foil 24 which is not covered by the filter layer 26 comprises approximately 61% of the total surface area of the foil 24 which forms a boundary of the inner space 23 of the capsule 2. The surface area of the foil 24 which is not covered by the filter layer 26 and which is provided with the exit openings 25 is also 61% of the total surface area of the foil 24 which forms a boundary of the inner space 23 of the capsule 2. In this example, the surface area of the foil which is not covered by the filter layer and which is provided with the exit openings is f*61% wherein f is 1.

In this example, the filter layer 26 does not extend to the circumferential wall 14. The disc-shaped filter layer 26 forms an island.

During brewing, the filter layer 26 catches fines of the coffee. The fines will spread in the filter layer 26 before reaching the exit openings 25 in the foil 24. In this way, at least not all fines will reach the exit openings 25, while a flow restriction is still formed. Additionally, the presence of a filter layer 26 may allow a preferred flow to form through the filter layer 26, because the flow resistance through the filter layer is smaller than the flow resistance through the compacted extractable product.

The inner space 23 of the capsule 2 was filled with 5.8 gm of ground roasted Ristreto coffee. The coffee has a pouring volume of 684 ml/250g and a particle density X50 of 400 µm. The percentage of fines, i.e. particles smaller than 100 µm is 13,8%.

When the capsules were filled with coffee having the above properties, the brewing time for a coffee was between 15-36 seconds. The crema layer was between 2 mm and 5,35 mm. DMA was between 3.14% and 3.49%.

When the filter layer 26 forms a ring, it is also conceivable that the filter layer does not extend to the circumferential wall. Preferably the area of the foil adjacent the circumferential wall and which is not covered by the ring is x% of the total area of the foil which forms a boundary of the inner space wherein x lays in the range of X1-X2, preferably in the range of X3-X4. Additionally, a centre opening of the ring may have a largest diameter lays within the range of 15%-60% of the largest diameter of the inner space at the foil.

The flow resistance of the discussed filter layers 26 may be F times smaller than a flow resistance of the extractable product wherein F lays in the range of F1-F2, preferably in the range of F2-F3 more preferably in the range of F4-F5.

The flow resistance of the filter layers 26 may be G times smaller than a flow resistance of the extractable product when being extracted with a fluid under a pressure of 9-18 bar wherein G lays in the range of 10-30, preferably in the range of 15-25 more preferably in the range of 18-22.

The flow resistance of the discussed filter layers 26 may for example be characterized by T wherein, while using a filter paper test device of the Herzberg design from Schroder Pruftechnik, T is the time in seconds for 100 ml of water to flow through an area of 10 cm2 of a sample of the filter layer in a direction perpendicular to a plane wherein the sample lays, with a starting water column of 33 cm, wherein the water temperature is at 20 degree C, wherein T lays in the range of 4-150, preferably 4-30, more preferably 5-20, for example in the range of 4-15 for filtering paper, for example in the range of 60-150 for white non woven and for example in the range of 45-80 for blue non woven. It will be clear that a filter layer as shown in the capsules according to the invention may be embodied a plurality of discrete filter layers. The discrete filter layers may be secured to the foil and/or held in place by the foil and the extractable product in the inner space of the capsule. The layout of the discrete filter layers may be considered a filter layer.

Furthermore, it will be appreciated that the figures are schematic. The depiction of the exit opening is purely schematic. Different sizes of exit openings, different distribution patterns, for example a hexagonal patter, and densities are all considered to fall under the scope of this invention.

It is also noted that brewing properties, such as brew time, crema layer, and DMA also depend on the extractable product contained in the inner space 23 of the capsule 2 and the obtained volume of the beverage.

In the foregoing specification, the invention has been described with reference to specific examples of embodiments of the invention. It will, however, be evident that various modifications and changes may be made therein without departing from the broader spirit and scope of the invention as set forth in the appended claims.

It is for instance possible that the capsule is contained in an air tight wrapping prior to use to improve shelf-life.

It is for instance possible that the capsule 2 has different dimensions or different shapes. In the examples the circumferential first wall 14 is substantially cylindrical. It will be appreciated that the capsule according to the invention is not limited to this shape. The circumferential first wall 14 may e.g. be frustoconical, hemispherical, or polygonal, such as hexagonal, octagonal, etc.

However, other modifications, variations and alternatives are also possible. The specifications, drawings and examples are, accordingly, to be regarded in an illustrative rather than in a restrictive sense.

In the claims, any reference signs placed between parentheses shall not be construed as limiting the claim. The word 'comprising' does not exclude the presence of other features or steps then those listed in a claim. Furthermore, the words 'a' and 'an' shall not be construed as limited to 'only one', but instead are used to mean 'at least one', and do not exclude a plurality. The mere fact that certain measures are recited in mutually different claims does not indicate that a combination of these measures cannot be used to advantage.

For the purpose of clarity and a concise description features are described herein as part of the same or separate embodiments, however, it will be appreciated that the scope of the invention may include embodiments having combinations of all or some of the features described.

## Claims

1. Capsule (2) for preparing a predetermined quantity of beverage suitable for consumption using an extractable product, for instance roast and ground coffee, comprising:
a substantially rigid circumferential wall (14),
a bottom (16) closing the circumferential wall at a first end (18), and
a lid (20, 20', 20",20"') closing the circumferential wall at a second, open, end (22) opposite the bottom, wherein the circumferential wall, the bottom and the lid enclose an inner space (23) comprising the extractable product, wherein the lid (20, 20', 20",20"') comprises a flexible foil (24), said foil having a plurality of exit openings (25) defining an exit area for draining of the prepared beverage, wherein inside the capsule (2) between the extractable product and the lid (20, 20', 20",20"') a substantially sheet shaped filter layer (26) is provided, **characterized in that** the filter layer (26) does not cover any of the exit openings in the foil, and **in that** the exit openings directly face the extractable product.

2. Capsule according to claim 1, wherein the substantially sheet shaped filter layer (26) comprises a layer of paper filtering material, a layer of non-woven material, or a layer of woven material.

3. Capsule according to claim 1 or 2, wherein the filter layer (26) extends substantially parallel along the lid (20, 20', 20",20"') preferably at least across the maximal transversal cross section of the second open end (22) of the capsule (2).

4. Capsule according to any one of claims 1-3, wherein in a centre area of said filter layer an opening is provided.

5. Capsule according to any one of the preceding claims, wherein the filter layer (26) abuts against the lid (20, 20', 20", 20"').

6. Capsule according to any one of the preceding claims, wherein only a circumferential edge of the filter layer (26) is connected to the lid (20, 20', 20",20"'), preferably adjacent a circumferential edge of said lid (20, 20', 20",20"').

7. Capsule according to any one of claims 1-5, wherein the filter layer (26) is connected to the lid (20, 20', 20",20"') along an entire surface of the filter layer (26).

8. Capsule according to any one of the preceding claims, wherein the capsule (2) comprises an outwardly extending rim (15) at the second end (22), wherein the lid (20, 20', 20", 20"') is attached to the outwardly extending rim (15).

9. Capsule according to claim 8, wherein a circumferential edge of the filter layer (26) is enclosed between the lid (20, 20', 20", 20"') and the outwardly extending rim (15).

10. Capsule according to claim 2 or any one of claims 3-9 when dependent on claim 2, wherein the layer of paper filtering material is of paper having a weight of approximately 1-250 grams/m2, more preferably between 10-100 grams/m2, preferably approximately 15-50 grams/m2.

11. Capsule according to claim 3 or any one of claims 3-9 when dependent on claim 2, wherein the layer (26) of non-woven material comprises a synthetic material comprising a structured network of fibers and/or meshes, for instance high density polyethylene (HDPE) fibres.

12. Capsule according to any one of the preceding claims, wherein the filter layer (26) has an air permeability of maximal 550 mm/second or maximal within the range of 550-2000 mm/second excluding 550 mm/second, measured at a pressure of approximately 200 Pascal.

13. Capsule according to any one of claims 10-12, wherein the filter layer (26) is provided with a plastic such as polyethylene (PE) or is coated to enhance the sealing properties for sealing the filter layer (26) to the foil (24).

14. Capsule according to any one of the preceding claims, wherein the capsule body is filled with approximately 4-11 grams, preferably 5-8 grams, more preferably 5.3-6 grams of roast and ground coffee, with an average particle size of approximately of 100-1000µm, preferably an average particle size of 200-750µm, more preferably an average particle size of 250-500µm.

15. Capsule according to any one of the preceding claims, wherein the foil (24) is a multilayer foil that comprises a first material layer (27) and a second material layer (28), wherein the tear strength of the second layer is higher than the tear strength of the first layer and wherein the first layer has a higher stiffness than the second layer.

16. Capsule according to claim 15, wherein the first material layer (27) is a layer of polyethylene terephthalate (PET-P) and the second material layer (28) is a layer of co-polymer polypropylene (CPP).

17. Capsule according to claim 16, wherein the layer (27) of PET-P has a thickness of approximately 15µm and the layer (28) of CPP has a thickness of approximately 30µm.

18. Capsule according to any one of the preceding claims, wherein the exit area of the foil (24) comprises 50-250 openings (25), preferably 70-190, more preferably 100-160 openings, wherein an average opening diameter is between 0.1mm and 0.5 mm.

19. Capsule according to any one of the preceding claims, wherein an open surface of the foil (24) formed by a total surface of the exit openings (25) is between 0.4-49.1mm².

20. Capsule according to any one of the preceding claims, wherein the bottom (16) comprises an entrance filter (19, 19', 19"), for instance a substantially rigid bottom (16) comprising a plurality of entrance openings (17) or for instance a porous sheet, such as a sheet of paper or the like non-woven material, or a perforate sheet, such as a polymeric film provided with a plurality of entrance openings, for supplying the fluid to the extractable product there through.

21. Capsule according to any one of the preceding claims, wherein the inner space of the capsule has a volume of the capsule is 10-20 ml, preferably 11-18 ml, more preferably 10-13 ml excluding approximately 12 ml or more preferably approximately 12 ml.

22. Capsule according to any one of the preceding claims, wherein the surface of the foil which is not covered by the filter layer comprises p% of the total surface area of the foil which forms a boundary of the inner space of the capsule wherein p lays in the range of 29-99.5, preferably in the range of 44-99.5, more preferably in the range of 54-99.5.

23. Capsule according to claim 22, wherein the surface area of the foil which is not covered by the filter layer and which is provided with the exit openings is f*p% wherein f lays in the range of 0.5-1.

24. Capsule according to any preceding claim, wherein the filter layer extends to the circumferential wall, more particularly wherein the full outer boundary of the filter layer extends to the circumferential wall.

25. Capsule according to any one of the preceding claims, wherein a first portion of the surface area of the foil which is covered by the filter layer lays at least substantially completely adjacent the circumferential wall.

26. Capsule according to claim 25, wherein c% an outer boundary of the first portion of the foil lays adjacent to the circumferential wall, wherein c is greater than 50, preferably greater than 85, more preferably greater than 95 and wherein c is most preferably 100.

27. Capsule according to any preceding claim 1-24, wherein the filter layer extends to each position of the circumferential wall adjacent the foil.

28. Capsule according to any preceding claim 1-23, wherein the filter layer does not extend to the circumferential wall.

29. Capsule according to any preceding claim, wherein the filter layer comprises one opening.

30. Capsule according to claim 29, wherein the opening has a surface area which is greater than a surface area of exit opening having the largest surface area.

31. Capsule according to any preceding claim 1-28, wherein the filter layer comprises a plurality of openings.

32. Capsule according to claim 31, wherein each opening has a surface area which is greater than surface area of exit opening having the largest surface area.

33. Capsule according to any one of the preceding claims, wherein a second portion of the surface area of the foil wherein the plurality of exit openings are distributed lays at least substantially completely at a distance from the circumferential wall.

34. Capsule according to any one of the preceding claims, wherein a third portion of the surface area of the foil which is not covered by the filter layer lays at least substantially completely at a distance from the circumferential wall.

35. Capsule according to claim 34, wherein a% of an outer circumferential boundary of the third portion of the surface area of the foil lays at a distance from the circumferential wall, wherein a is greater than 50, preferably greater than 85, more preferably greater than 95 and wherein a is most preferably 100 and wherein a distance is defined as 5-30% from a diameter of the inner space adjacent the foil.

36. Capsule according to any preceding claim, wherein the filter layer has the shape of a ring.

37. Capsule according to claim 24 and 36 or claim 27 and 36, wherein a centre opening of the ring has a largest diameter lays within the range of 25%-75% of the largest diameter of the inner space at the foil.

38. Capsule according to claims 28 and 36, wherein the area of the foil adjacent the circumferential wall and which is not covered by the ring is x% of the total area of the foil which forms a boundary of the inner space wherein x lays in the range of 10-50, preferably in the range of 15-40.

39. Capsule according to claim 38, wherein a centre opening of the ring has a largest diameter lays within the range of 15%-60% of the largest diameter of the inner space at the foil.

40. Capsule according to claim 36, wherein an outer circumferential boundary of the filter layer lays adjacent the circumferential wall and wherein preferably the centre area has a cross section of S mm wherein S lays in the range of 12-26, preferably in the range of 14-25 and more preferably within the range of 16-24 and wherein preferably the outer diameter of the portion of the filter layer which forms a boundary of the inner space has a cross section of about 28-30mm and/or wherein preferably the diameter of the inner space near the foil is about 28-30mm .

41. Capsule according to any preceding claim 1-35, wherein the filter layer has the shape of a strip.

42. Capsule according to claim 41, wherein the filter layer having the shape of a strip is provided with two opposite ends laying adjacent the circumferential wall and two opposite sides each laying at a distance from the circumferential wall.

43. Capsule according to any preceding claim 1-35, wherein the filter layer has the shape of a disc.

44. Capsule according to any preceding claim 1-35, wherein the filter layer has the shape of a DE-brand.

45. Capsule according to any preceding claim, characterised that a centre of the filter at least substantially coincides with a centre of that part of the foil which forms a boundary of the inner space.

46. Capsule according to any of the preceding claims, wherein filter layer fills c% of the volume of the inner space of the capsule wherein c lays within the range of 0.1-8, preferably within the range of 0.1-6.5, more preferably within the range of 0.1-3.

47. Capsule according to any of the preceding claims, wherein a flow resistance of the filter layer is larger than a flow resistance of the extractable product

48. Capsule according to any of the preceding claims, wherein a flow resistance of the filter layer is smaller than a flow resistance of the extractable product when being extracted with a fluid under a pressure of 9-18 bar.

49. Capsule according to any of the preceding claims, wherein a flow resistance of the filter layer is **characterized by** T wherein, while using a filter paper test device of the Herzberg design, T is the time in seconds for 100 ml of water to flow through an area of 10 cm2 of a sample of the filter layer in a direction perpendicular to a plane wherein the sample lays, with a starting water column of 33 cm, wherein the water temperature is at 20 degree C, wherein T lays in the range of 4-150, preferably 4-30, more preferably 5-20, for example in the range of 4-15 for filtering paper, for example in the range of 60-150 for white non woven and for example in the range of 45-80 for blue non woven.

50. Capsule according to any of the preceding claims, wherein the density of the extractable product is D gr/cm3, wherein D lays in the range of 0.278-0.5, preferably within the range of 0.313-0.455, more preferably in the range of 0.379-0416.

51. Capsule according to any of the preceding claims, wherein the extractable product is ground coffee and wherein an average particle size of the extractable product is E micro meter wherein E lays in the range of 100-1000, preferably within the range of 200-750, more preferably in the range of 250-500.

52. Capsule according to any of the preceding claims, wherein the particles of the extractable product comprises L% fines in volume wherein L lays in the range of 7-60, preferably within the range of 8-30, more preferably in the range of 10-20.

53. Capsule according to any one of the preceding claims, wherein the exit area of the foil (24) comprises 50-250 openings (25), preferably 70-190, more preferably 100-160 openings.

54. Capsule according to any one of the preceding claims, wherein an average open area of the exit opening is z mm2 per exit opening, wherein z lays in the range of 0.008-0.2, preferably in the range of 0.03-0.13, more preferably in the range of 0.05-0.1.

55. Capsule according to any one of the preceding claims, wherein an average diameter of the exit opening is d µm per exit opening, wherein d lays in the range of 100-500, preferably in the range of 200-400, more preferably in the range of 250-350.

56. Capsule according to any preceding claim, wherein the filter layer has a thickness of T mm wherein T is in the range of 0.05-0.01, excluding 0.01, or 0.01-1 or 1-10 excluding 1, preferably 0.05 - 0.5 , more preferably 0.05-0.2.

57. Capsule according to any preceding claim, wherein the filter layer comprises a stack of sub filter layer wherein each sub filter layer is sheet shaped.

58. Capsule according to claim 57, wherein the stack comprises 2-6 sub filter layers

59. Capsule according to any preceding claim, wherein the extractable comprises or consists of H grams of ground coffee wherein H is in the range of 4-11, preferably in the range of 5-8 more preferably in the range of 5.3-6.

60. Capsule according to any preceding claims, wherein the bottom comprise a plurality of slits forming entrance openings of the capsule.

61. System for preparing a predetermined quantity of beverage suitable for consumption using an extractable product, comprising:
an exchangeable capsule (2) according to any one of the preceding claims, and
an apparatus (4) comprising a receptacle (6) for holding the exchangeable capsule, and a fluid dispensing device (5) for supplying an amount of a fluid, such as water, under pressure to the exchangeable capsule,
wherein the fluid dispensing device (5) is arranged for supplying the fluid to the extractable product through the bottom (16) for forming the beverage,
wherein the receptacle (6) comprises a support surface (10), and wherein the capsule (2) arranged to at least partly abut against the support surface (10) for draining the prepared beverage from the capsule (2) through the lid (20, 20', 20",20"') and through the support surface (10),
wherein the system comprises an outlet (32) which, in use, is in fluid communication with the lid (20, 20', 20", 20"') for draining the prepared beverage from the capsule (2) and supplying the beverage to a container such as a cup.

62. System according to claim 61, wherein the fluid is supplied under a pressure of 4-20 bar, preferably under 9-18 bar.

63. System according to claim 61 or 62, wherein the extractable product comprises or consists of ground coffee wherein the pouring volume of roast and ground coffee is U cc/250 gr wherein U lays within the range of 500-900, preferably in the range of 575-700, more preferably in the range of 600-660.

64. System according to claim 61, 62 or 63, wherein V ml of fluid is supplied to the capsule wherein V lays within the range of 20-200, preferably within the range of 25-140, more preferably within the range of 25-110.

65. System according to any of the preceding claims 61-64, wherein a flow resistance of the filter layer is smaller than a flow resistance of the extractable product when being extracted with a fluid under a pressure of 5-19 bar.

66. System according to any one of the claims 61-65, wherein the foil of the lid is configured to stay intact when being used in the apparatus that further comprises lid piercing means intended for piercing a lid of a closed capsule.

67. Method for preparing a predetermined quantity of beverage suitable for consumption using an extractable product, using a system (1) according to claim 61-66 and/or an exchangeable capsule (2) according to any one of claims 1-60.

68. Method according to claim 67, wherein the fluid is supplied under a pressure of 4-20 bar, preferably under 9-18 bar.

69. Method according to claim 67 or 68, wherein the extractable product comprises or consists of ground coffee wherein the pouring volume of roast and ground coffee is U cc/250 gr wherein U lays within the range of 500-900, preferably in the range of 575-700, more preferably in the range of 600-660.

70. Method according to claim 67, 68 or 69, wherein V ml of fluid is supplied to the capsule wherein V lays within the range of 20-200, preferably within the range of 25-140, more preferably within the range of 25-110.

71. Method according to any one of claims 67-70, wherein the beverage, for example a lungo, is prepared in J sec wherein J is in the range of 30-70, preferably in the range of 38-55 more preferably in the range of 42-48 and wherein the amount of beverage prepared is L ml wherein L is in the range of 100-120, preferably in the range of 105-115 more preferably in the range of 108-112.

72. Method according to any one of claims 67-70, wherein the beverage, for example espresso, is prepared in J sec wherein J is in the range of 10-45, preferably in the range of 15-35 more preferably in the range of 18-32 and wherein the amount of beverage prepared is L ml wherein L is in the range of 35-45, preferably in the range of 38-42 more preferably in the range of 39-40.

73. Method according to any of the preceding claims 67-72, wherein a flow resistance of the filter layer is G times smaller than a flow resistance of the extractable product when being extracted with a fluid under a pressure of 9-18 bar.

## Patentansprüche

1. Kapsel (2) zur Herstellung einer vorbestimmten Menge eines für den Konsum geeigneten Getränks unter Verwendung eines extrahierbaren Produkts, wie etwa geröstetem und gemahlenem Kaffee, umfassend:
eine im Wesentlichen starre, umlaufende Wand (14),
einen Boden (16), der die umlaufende Wand an einem ersten Ende (18) verschließt, und
einen Deckel (20, 20', 20", 20"'), der die umlaufende Wand an einem zweiten offenen Ende (22) gegenüber dem Boden verschließt, wobei die umlaufende Wand, der Boden und der Deckel einen Innenraum (23), der das extrahierbare Produkt enthält, einschließen, wobei der Deckel (20, 20', 20", 20"') eine flexible Folie (24) umfasst, welche Folie eine Vielzahl von Ausgangsöffnungen (25) hat, definierend einen Ausgangsbereich zum Ablassen des hergestellten Getränks, wobei in der Kapsel (2) zwischen dem extrahierbaren Produkt und dem Deckel (20, 20', 20", 20"') eine im Wesentlichen blattförmige Filterschicht (26) bereitgestellt ist, **dadurch gekennzeichnet, dass** die Filterschicht (26) keine der Öffnungen in der Folie bedeckt und dass die Ausgangsöffnungen dem extrahierbaren Produkt direkt gegenüber liegen.

2. Kapsel nach Anspruch 1, wobei die im Wesentlichen blattförmige Filterschicht (26) eine Schicht aus Papierfiltermaterial, eine Schicht aus ungewebtem Material oder eine Schicht aus gewebtem Material umfasst.

3. Kapsel nach Anspruch 1 oder 2, wobei die Filterschicht (26) im Wesentlichen parallel entlang des Deckels (20, 20', 20", 20"'), bevorzugt mindestens über den maximalen transversalen Querschnitt des zweiten offenen Endes (22) der Kapsel (2), verläuft.

4. Kapsel nach einem der Ansprüche 1-3, wobei in einem Mittenbereich der Filterschicht eine Öffnung bereitgestellt ist.

5. Kapsel nach einem der vorhergehenden Ansprüche, wobei die Filterschicht (26) gegen den Deckel (20, 20', 20", 20"') stößt.

6. Kapsel nach einem der vorhergehenden Ansprüche, wobei nur eine umlaufende Kante der Filterschicht (26) mit dem Deckel (20, 20', 20", 20"') verbunden ist, bevorzugt neben einer umlaufenden Kante des Deckels (20, 20', 20", 20"').

7. Kapsel nach einem der Ansprüche 1-5, wobei die Filterschicht (26) entlang einer ganzen Oberfläche der Filterschicht (26) mit dem Deckel (20, 20', 20", 20"') verbunden ist.

8. Kapsel nach einem der vorhergehenden Ansprüche, wobei die Kapsel (2) einen nach außen verlaufenden Rand (15) an dem zweiten Ende (22) umfasst, wobei der Deckel (20, 20', 20", 20"') an dem nach außen verlaufenden Rand (15) befestigt ist.

9. Kapsel nach Anspruch 8, wobei eine umlaufende Kante der Filterschicht (26) zwischen dem Deckel (20, 20', 20", 20"') und dem nach außen verlaufenden Rand (15) eingeschlossen ist.

10. Kapsel nach Anspruch 2 oder einem der Ansprüche 3-9, wenn abhängig von Anspruch 2, wobei die Schicht aus Papierfiltermaterial aus Papier mit einem Gewicht von ungefähr 1-250 Gramm/m2 ist, bevorzugter zwischen 10-100 Gramm/m2, bevorzugt ungefähr 15-50 Gramm/m2.

11. Kapsel nach Anspruch 3 oder einem der Ansprüche 3-9, wenn abhängig von Anspruch 2, wobei die Schicht (26) aus ungewebtem Material ein Synthetikmaterial, umfassend ein strukturiertes Netz von Fasern und/oder Maschen, zum Beispiel HDPE (engl. High Density Polyethylen)-Fasern, umfasst.

12. Kapsel nach einem der vorhergehenden Ansprüche, wobei die Filterschicht (26) eine Luftdurchlässigkeit von maximal 550 mm/Sekunde oder maximal innerhalb des Bereichs von 550-2000 mm/Sekunde, ausschließlich 550 mm/Sekunde, gemessen bei einem Druck von ungefähr 200 Pascal, hat.

13. Kapsel nach einem der Ansprüche 10-12, wobei die Filterschicht (26) mit einem Kunststoff wie etwa Polyethylen (PE) versehen oder beschichtet ist, um die Versiegelungseigenschaften zum Versiegeln der Filterschicht (26) an der Folie (24) zu verbessern.

14. Kapsel nach einem der vorhergehenden Ansprüche, wobei der Kapselkörper gefüllt ist mit ungefähr 4-11 Gramm, bevorzugt 5-8 Gramm, bevorzugter 5,3-6 Gramm geröstetem und gemahlenem Kaffee mit einer durchschnittlichen Partikelgröße von ungefähr 100-1000 µm, bevorzugt einer durchschnittlichen Partikelgröße von 200-750 µm, bevorzugter einer durchschnittlichen Partikelgröße von 250-500 µm.

15. Kapsel nach einem der vorhergehenden Ansprüche, wobei die Folie (24) eine mehrschichtige Folie ist, die eine erste Materialschicht (27) und eine zweite Materialschicht (28) umfasst, wobei die Reißfestigkeit der zweiten Schicht höher ist als die Reißfestigkeit der ersten Schicht, und wobei die erste Schicht eine höhere Steifigkeit als die zweite Schicht hat.

16. Kapsel nach Anspruch 15, wobei die erste Materialschicht (27) eine Schicht aus Polyethylenterephthalat (PET-P) ist und die zweite Materialschicht (28) eine Schicht aus Copolymer-Polypropylen (CPP) ist.

17. Kapsel nach Anspruch 16, wobei die Schicht (27) aus PET-P eine Dicke von ungefähr 15 µm hat und die Schicht (28) aus CPP eine Dicke von ungefähr 30 µm hat.

18. Kapsel nach einem der vorhergehenden Ansprüche, wobei der Ausgangsbereich der Folie (24) 50-250 Öffnungen (25), bevorzugt 70-190, bevorzugter 100-160 Öffnungen, umfasst, wobei ein durchschnittlicher Öffnungsdurchmesser zwischen 0,1 mm und 0,5 mm ist.

19. Kapsel nach einem der vorhergehenden Ansprüche, wobei eine offene Oberfläche der Folie (24), gebildet von einer Gesamtoberfläche der Ausgangsöffnungen (25), zwischen 0,4-49,1 mm² ist.

20. Kapsel nach einem der vorhergehenden Ansprüche, wobei der Boden (16) einen Eingangsfilter (19, 19', 19") umfasst, zum Beispiel einen im Wesentlichen starren Boden (16), umfassend eine Vielzahl von Eingangsöffnungen (17) oder zum Beispiel ein poröses Blatt, wie etwa ein Blatt Papier oder ähnliches ungewebtes Material, oder ein perforiertes Blatt, wie etwa einen Polymerfilm, versehen mit einer Vielzahl von Eingangsöffnungen, um durch diese hindurch die Flüssigkeit dem extrahierbaren Produkt zuzuführen.

21. Kapsel nach einem der vorhergehenden Ansprüche, wobei der Innenraum der Kapsel ein Volumen von 10-20 ml hat, bevorzugt 11-18 ml, bevorzugter 10-13 ml, ausschließlich ungefähr 12 ml, oder bevorzugter ungefähr 12 ml.

22. Kapsel nach einem der vorhergehenden Ansprüche, wobei die Oberfläche der Folie, die nicht von der Filterschicht bedeckt ist, p % des gesamten Oberflächenbereichs der Folie umfasst, der eine Begrenzung des Innenraums der Kapsel bildet, wobei p im Bereich von 29-99,5 liegt, bevorzugt im Bereich von 44-99,5, bevorzugter im Bereich von 54-99,5.

23. Kapsel nach Anspruch 22, wobei der Oberflächenbereich der Folie, der nicht von der Filterschicht bedeckt ist und der mit den Ausgangsöffnungen versehen ist, f*p % ist, wobei f im Bereich von 0,5-1 liegt.

24. Kapsel nach einem der vorhergehenden Ansprüche, wobei die Filterschicht zu der umlaufenden Wand verläuft, insbesondere wobei die volle Außenbegrenzung der Filterschicht zu der umlaufenden Wand verläuft.

25. Kapsel nach einem der vorhergehenden Ansprüche, wobei ein erster Abschnitt des Oberflächenbereichs der Folie, der von der Filterschicht bedeckt ist, mindestens im Wesentlichen vollständig neben der umlaufenden Wand liegt.

26. Kapsel nach Anspruch 25, wobei c % einer Außenbegrenzung des ersten Abschnitts der Folie neben der umlaufenden Wand liegt, wobei c größer als 50 ist, bevorzugt größer als 85, bevorzugter größer als 95, und wobei c am bevorzugtesten 100 ist.

27. Kapsel nach einem der vorhergehenden Ansprüche 1-24, wobei die Filterschicht zu jeder Position der umlaufenden Wand neben der Folie verläuft.

28. Kapsel nach einem der vorhergehenden Ansprüche 1-23, wobei die Filterschicht nicht zu der umlaufenden Wand verläuft.

29. Kapsel nach einem der vorhergehenden Ansprüche, wobei die Filterschicht eine Öffnung umfasst.

30. Kapsel nach Anspruch 29, wobei die Öffnung einen Oberflächenbereich hat, der größer ist als ein Oberflächenbereich einer Ausgangsöffnung mit dem größten Oberflächenbereich.

31. Kapsel nach einem der vorhergehenden Ansprüche 1-28, wobei die Filterschicht eine Vielzahl von Öffnungen umfasst.

32. Kapsel nach Anspruch 31, wobei jede Öffnung einen Oberflächenbereich hat, der größer ist als der Oberflächenbereich einer Ausgangsöffnung mit dem größten Oberflächenbereich.

33. Kapsel nach einem der vorhergehenden Ansprüche, wobei ein zweiter Abschnitt des Oberflächenbereichs der Folie, in dem die Vielzahl von Ausgangsöffnungen verteilt sind, mindestens im Wesentlichen vollständig in einem Abstand von der umlaufenden Wand liegt.

34. Kapsel nach einem der vorhergehenden Ansprüche, wobei ein dritter Abschnitt des Oberflächenbereichs der Folie, der nicht von der Filterschicht bedeckt ist, mindestens im Wesentlichen vollständig in einem Abstand von der umlaufenden Wand liegt.

35. Kapsel nach Anspruch 34, wobei a % einer Außenumfangbegrenzung des dritten Abschnitts des Oberflächenbereichs der Folie in einem Abstand von der umlaufenden Wand liegt, wobei a größer als 50 ist, bevorzugt größer als 85, bevorzugter größer als 95, und wobei a am bevorzugtesten 100 ist und wobei ein Abstand als 5-30 % von einem Durchmesser des Innenraums neben der Folie definiert ist.

36. Kapsel nach einem der vorhergehenden Ansprüche, wobei die Filterschicht die Form eines Ringes hat.

37. Kapsel nach Anspruch 24 und 36 oder Anspruch 27 und 36, wobei eine Mittenöffnung des Ringes einen größten Durchmesser hat, der innerhalb des Bereichs von 25 %-75 % des größten Durchmessers des Innenraums an der Folie liegt.

38. Kapsel nach den Ansprüchen 28 und 36, wobei der Bereich der Folie neben der umlaufenden Wand und der nicht von dem Ring bedeckt ist x % des Gesamtbereichs der Folie ist, der eine Begrenzung des Innenraums bildet, wobei x im Bereich von 10-50, bevorzugt im Bereich von 15-40, liegt.

39. Kapsel nach Anspruch 38, wobei eine Mittenöffnung des Ringes einen größten Durchmesser hat, der innerhalb des Bereichs von 15 %-60 % des größten Durchmessers des Innenraums an der Folie liegt.

40. Kapsel nach Anspruch 36, wobei eine Außenumfangbegrenzung der Filterschicht neben der umlaufenden Wand liegt und wobei bevorzugt der Mittenbereich einen Querschnitt von S mm hat, wobei S im Bereich von 12-26 liegt, bevorzugt im Bereich von 14-25 und bevorzugter innerhalb des Bereichs von 16-24, und wobei bevorzugt der Außendurchmesser des Abschnitts der Filterschicht, die eine Begrenzung des Innenraums bildet, einen Querschnitt von ungefähr 28-30 mm hat und/oder wobei bevorzugt der Durchmesser des Innenraums nahe der Folie ungefähr 28-30 mm ist.

41. Kapsel nach einem der vorhergehenden Ansprüche 1-35, wobei die Filterschicht die Form eines Streifens hat.

42. Kapsel nach Anspruch 41, wobei die Filterschicht mit der Form eines Streifens mit zwei gegenüberliegenden Enden, die neben der umlaufenden Wand liegen, und zwei gegenüberliegenden Seiten, die jeweils in einem Abstand von der umlaufenden Wand liegen, versehen ist.

43. Kapsel nach einem der vorhergehenden Ansprüche 1-35, wobei die Filterschicht die Form einer Scheibe hat.

44. Kapsel nach einem der vorhergehenden Ansprüche 1-35, wobei die Filterschicht die Form einer DE-Marke hat.

45. Kapsel nach einem der vorhergehenden Ansprüche, **dadurch gekennzeichnet, dass** eine Mitte des Filters im Wesentlichen deckungsgleich mit einer Mitte des Teils der Folie ist, der eine Begrenzung des Innenraums bildet.

46. Kapsel nach einem der vorhergehenden Ansprüche, wobei die Filterschicht c % des Volumens des Innenraums der Kapsel bildet, wobei c innerhalb des Bereichs von 0,1-8 liegt, bevorzugt innerhalb des Bereichs von 0,1-6,5, bevorzugter innerhalb des Bereichs von 0,1-3.

47. Kapsel nach einem der vorhergehenden Ansprüche, wobei ein Fließwiderstand der Filterschicht größer ist als ein Fließwiderstand des extrahierbaren Produkts.

48. Kapsel nach einem der vorhergehenden Ansprüche, wobei ein Fließwiderstand der Filterschicht kleiner ist als ein Fließwiderstand des extrahierbaren Produkts, wenn extrahiert mit einer Flüssigkeit unter einem Druck von 9-18 Bar.

49. Kapsel nach einem der vorhergehenden Ansprüche, wobei ein Fließwiderstand der Filterschicht gekennzeichnet wird durch T, wobei, bei Verwendung einer Filterpapier-Testvorrichtung vom Herzberg-Design, T die Zeit in Sekunden ist, in der 100 ml Wasser durch einen Bereich von 10 cm2 einer Probe der Filterschicht in eine Richtung senkrecht zu einer Ebene, in der die Probe liegt, mit einer Startwassersäule von 33 cm fließen, wobei die Wassertemperatur bei 20 Grad C ist, wobei T im Bereich von 4-150 liegt, bevorzugt 4-30, bevorzugter 5-20, zum Beispiel im Bereich von 4-15 für Filterpapier, zum Beispiel im Bereich von 60-150 für weißes, ungewebtes und zum Beispiel im Bereich von 45-80 für blaues ungewebtes.

50. Kapsel nach einem der vorhergehenden Ansprüche, wobei die Dichte des extrahierbaren Produkts D g/cm3 ist, wobei D im Bereich von 0,278-0,5 liegt, bevorzugt innerhalb des Bereichs von 0,313-0,455, bevorzugter im Bereich von 0,379-0,416.

51. Kapsel nach einem der vorhergehenden Ansprüche, wobei das extrahierbare Produkt gemahlener Kaffee ist und wobei eine durchschnittliche Partikelgröße des extrahierbaren Produkts E Mikrometer ist, wobei E im Bereich von 100-1000 liegt, bevorzugt innerhalb des Bereichs von 200-750, bevorzugter im Bereich von 250-500.

52. Kapsel nach einem der vorhergehenden Ansprüche, wobei die Partikel des extrahierbaren Produkts L % Feinstoffe in Volumen umfassen, wobei L im Bereich von 7-60 liegt, bevorzugt innerhalb des Bereichs von 8-30, bevorzugter im Bereich von 10-20.

53. Kapsel nach einem der vorhergehenden Ansprüche, wobei der Ausgangsbereich der Folie (24) 50-250 Öffnungen (25) umfasst, bevorzugt 70-190, bevorzugter 100-160 Öffnungen.

54. Kapsel nach einem der vorhergehenden Ansprüche, wobei ein durchschnittlicher offener Bereich der Ausgangsöffnungen z mm2 pro Ausgangsöffnung ist, wobei z im Bereich von 0,008-0,2 liegt, bevorzugt im Bereich von 0,03-0,13, bevorzugter im Bereich 0,05-0,1.

55. Kapsel nach einem der vorhergehenden Ansprüche, wobei ein durchschnittlicher Durchmesser der Ausgangsöffnung d µm pro Ausgangsöffnung ist, wobei d im Bereich von 100-500 liegt, bevorzugt im Bereich von 200-400, bevorzugter im Bereich von 250-350.

56. Kapsel nach einem der vorhergehenden Ansprüche, wobei die Filterschicht eine Dicke von T mm hat, wobei T im Bereich von 0,05-0,01, ausschließlich 0,01, oder 0,01-1 oder 1-10, ausschließlich 1, ist, bevorzugt 0,05-0,5, bevorzugter 0,05-0,2.

57. Kapsel nach einem der vorhergehenden Ansprüche, wobei die Filterschicht einen Stapel von Subfilterschichten umfasst, wobei jede Subfilterschicht blattförmig ist.

58. Kapsel nach Anspruch 57, wobei der Stapel 2-6 Subfilterschichten umfasst.

59. Kapsel nach einem der vorhergehenden Ansprüche, wobei das extrahierbare Produkt H Gramm gemahlenen Kaffee umfasst oder daraus besteht, wobei H im Bereich von 4-11 ist, bevorzugt im Bereich von 5-8, bevorzugter im Bereich von 5,3-6.

60. Kapsel nach einem der vorhergehenden Ansprüche, wobei der Boden eine Vielzahl von Schlitzen umfasst, die Eingangsöffnungen der Kapsel bilden.

61. System zur Herstellung einer vorbestimmten Menge eines für den Konsum geeigneten Getränks unter Verwendung eines extrahierbaren Produkts, umfassend:
eine austauschbare Kapsel (2) nach einem der vorhergehenden Ansprüche und
eine Vorrichtung (4), umfassend ein Behältnis (6) zum Aufnehmen der austauschbaren Kapsel und eine Flüssigkeitsabgabevorrichtung (5), um eine Menge einer Flüssigkeit, wie etwa Wasser, unter Druck der austauschbaren Kapsel zuzuführen,
wobei die Flüssigkeitsabgabevorrichtung (5) angeordnet ist, um die Flüssigkeit dem extrahierbaren Produkt durch den Boden (16) zuzuführen, um das Getränk zu bilden,
wobei das Behältnis (6) eine Stützfläche (10) umfasst, und wobei die Kapsel (2) angeordnet ist, um mindestens teilweise gegen die Stützfläche (10) zu stoßen, um das hergestellte Getränk durch den Deckel (20, 20', 20", 20"') und durch die Stützfläche (10) aus der Kapsel abzulassen,
wobei das System einen Auslass (32) umfasst, der, bei Verwendung, in Flüssigkeitskommunikation mit dem Deckel (20, 20', 20", 20"') ist, um das hergestellte Getränk aus der Kapsel (2) abzulassen und das Getränk einem Behälter, wie etwa einer Tasse, zuzuführen.

62. System nach Anspruch 61, wobei die Flüssigkeit unter einem Druck von 4-20 Bar, bevorzugt unter 9-18 Bar, zugeführt wird.

63. System nach Anspruch 61 oder 62, wobei das extrahierbare Produkt gemahlenen Kaffee umfasst oder aus diesem besteht, wobei das Gießvolumen des gerösteten und gemahlenen Kaffees U cc/250 g ist, wobei U innerhalb des Bereichs von 500-900 liegt, bevorzugt im Bereich von 575-700, bevorzugter im Bereich von 600-660.

64. System nach Anspruch 61, 62 oder 63, wobei V ml Flüssigkeit der Kapsel zugeführt wird, wobei V innerhalb des Bereichs von 20-200 liegt, bevorzugt innerhalb des Bereichs von 25-140, bevorzugter innerhalb des Bereichs von 25-110

65. System nach einem der vorhergehenden Ansprüche 61-64, wobei ein Fließwiderstand der Filterschicht kleiner ist als ein Fließwiderstand des extrahierbaren Produkts, wenn extrahiert mit einer Flüssigkeit unter einem Druck von 5-19 Bar.

66. System nach einem der Ansprüche 61-65, wobei die Folie des Deckels konfiguriert ist, um intakt zu bleiben, wenn sie in der Vorrichtung verwendet wird, die ferner Deckeldurchstechmittel zum Durchstechen eines Deckels einer geschlossenen Kapsel umfasst.

67. Verfahren zur Herstellung einer vorbestimmten Menge eines für den Konsum geeigneten Getränks unter Verwendung eines extrahierbaren Produkts, unter Verwendung eines Systems (1) nach Anspruch 61-66 und/oder einer austauschbaren Kapsel (2) nach einem der Ansprüche 1-60.

68. Verfahren nach Anspruch 67, wobei die Flüssigkeit unter einem Druck von 4-20 Bar, bevorzugt unter 9-18 Bar, zugeführt wird.

69. Verfahren nach Anspruch 67 oder 68, wobei das extrahierbare Produkt gemahlenen Kaffee umfasst oder daraus besteht, wobei das Gießvolumen von geröstetem und gemahlenem Kaffee U cc/250g ist, wobei U innerhalb des Bereichs von 500-900 liegt, bevorzugt im Bereich von 575-700, bevorzugter im Bereich von 600-660.

70. Verfahren nach Anspruch 67, 68 oder 69, wobei V ml Flüssigkeit der Kapsel zugeführt wird, wobei V innerhalb des Bereichs von 20-200 liegt, bevorzugt innerhalb des Bereichs von 25-140, bevorzugter innerhalb des Bereichs von 25-110.

71. Verfahren nach einem der Ansprüche 67-70, wobei das Getränk, zum Beispiel ein Lungo, in J Sekunden hergestellt wird, wobei J im Bereich von 30-70 ist, bevorzugt im Bereich von 38-55, bevorzugter im Bereich von 42-48, und wobei die Menge des hergestellten Getränks L ml ist, wobei L im Bereich von 100-120 ist, bevorzugt im Bereich von 105-115, bevorzugter im Bereich von 108-112.

72. Verfahren nach einem der Ansprüche 67-70, wobei das Getränk, zum Beispiel Espresso, in J Sekunden hergestellt wird, wobei J im Bereich von 10-45 ist, bevorzugt im Bereich von 15-35, bevorzugter im Bereich von 18-32, und wobei die Menge des hergestellten Getränks L ml ist, wobei L im Bereich von 35-45 ist, bevorzugt im Bereich von 38-42, bevorzugter im Bereich von 39-40.

73. Verfahren nach einem der vorhergehenden Ansprüche 67-72, wobei ein Fließwiderstand der Filterschicht G Mal kleiner ist als ein Fließwiderstand des extrahierbaren Produkts, wenn extrahiert mit einer Flüssigkeit unter einem Druck von 9-18 Bar.

## Revendications

1. Capsule (2) pour la préparation d'une quantité prédéfinie d'une boisson propre à la consommation au moyen d'un produit extractible, par exemple du café torréfié et moulu, comprenant :
une paroi circonférentielle sensiblement rigide (14),
un fond (16) fermant la paroi circonférentielle à une première extrémité (18), et
un couvercle (20, 20', 20", 20"') fermant la paroi circonférentielle à une seconde extrémité (22), ouverte, opposée au fond, dans laquelle la paroi circonférentielle, le fond et le couvercle entourent un espace intérieur (23) comprenant le produit extractible, dans laquelle le couvercle (20, 20', 20",20"') comprend une feuille souple (24), ladite feuille ayant une pluralité d'ouvertures de sortie (25) définissant une zone de sortie pour l'évacuation de la boisson préparée, dans laquelle à l'intérieur de la capsule (2) entre le produit extractible et le couvercle (20, 20', 20",20"') est prévue une couche formant filtre sensiblement en forme de feuille (26), **caractérisée en ce que** la couche formant filtre (26) ne couvre aucune des ouvertures de sortie dans la feuille, et **en ce que** les ouvertures de sortie font directement face au produit extractible.

2. Capsule selon la revendication 1, dans laquelle la couche formant filtre sensiblement en forme de feuille (26) comprend une couche d'un matériau filtrant à base de papier, une couche d'un matériau non tissé, ou une couche d'un matériau tissé.

3. Capsule selon les revendications 1 ou 2, dans laquelle la couche formant filtre (26) s'étend sensiblement parallèlement le long du couvercle (20, 20', 20", 20"') de préférence au moins sur la section transversale maximale de la seconde extrémité ouverte (22) de la capsule (2).

4. Capsule selon l'une quelconque des revendications 1 à 3, dans laquelle dans une zone centrale de ladite couche formant filtre est prévue une ouverture.

5. Capsule selon l'une quelconque des revendications précédentes, dans laquelle la couche formant filtre (26) vient en butée contre le couvercle (20, 20', 20", 20"').

6. Capsule selon l'une quelconque des revendications précédentes, dans laquelle seul un bord circonférentiel de la couche formant filtre (26) est relié au couvercle (20, 20', 20", 20"'), de préférence adjacent à un bord circonférentiel dudit couvercle (20, 20', 20",20"').

7. Capsule selon l'une quelconque des revendications 1 à 5, dans laquelle la couche formant filtre (26) est reliée au couvercle (20, 20', 20", 20"') le long de toute la surface de la couche formant filtre (26).

8. Capsule selon l'une quelconque des revendications précédentes, dans laquelle la capsule (2) comprend an rebord s'étendant vers l'extérieur (15) à la seconde extrémité (22), dans laquelle le couvercle (20, 20', 20", 20"') est fixé au rebord s'étendant vers l'extérieur (15).

9. Capsule selon la revendication 8, dans laquelle un bord circonférentiel de la couche formant filtre (26) est enserré entre le couvercle (20, 20', 20", 20"') et le rebord s'étendant vers l'extérieur (15).

10. Capsule selon la revendication 2 ou l'une quelconque des revendications 3 à 9 lorsqu'elles dépendent de la revendication 2, dans laquelle la couche de matériau filtrant à base de papier est constituée d'un papier ayant un poids d'environ 1 à 250 grammes/m², de préférence encore compris entre 10 et 100 grammes/m², de préférence d'environ 15 à 50 grammes/m².

11. Capsule selon la revendication 3 ou l'une quelconque des revendications 3 à 9 lorsqu'elles dépendent de la revendication 2, dans laquelle la couche (26) de matériau non tissé comprend un matériau synthétique comprenant un réseau structuré de fibres et/ou de mailles, par exemple des fibres de polyéthylène haute densité (PEHD).

12. Capsule selon l'une quelconque des revendications précédentes, dans laquelle la couche formant filtre (26) présente une perméabilité à l'air au maximum de 550 mm/seconde ou au maximum dans la plage de 550 à 2000 mm/seconde en excluant 550 mm/seconde, mesurée à une pression d'environ 200 Pascals.

13. Capsule selon l'une quelconque des revendications 10 à 12, dans laquelle la couche formant filtre (26) est pourvue d'une matière plastique de type polyéthylène (PE) ou est appliquée dans le but d'améliorer les propriétés d'étanchéité pour sceller la couche formant filtre (26) sur la feuille (24).

14. Capsule selon l'une quelconque des revendications précédentes, dans laquelle le corps de la capsule est rempli d'environ 4 à 11 grammes, de préférence de 5 à 8 grammes, de préférence encore de 5,3 à 6 grammes de café torréfié et moulu, avec une granulométrie moyenne d'environ 100 à 1000 µm, de préférence une granulométrie moyenne de 200 à 750 µm, de préférence encore une granulométrie moyenne de 250 à 500 µm.

15. Capsule selon l'une quelconque des revendications précédentes, dans laquelle la feuille (24) est une feuille multicouche qui comprend une première couche de matériau (27) et une seconde couche de matériau (28), la résistance à la déchirure de la seconde couche étant supérieure à la résistance à la déchirure de la première couche et la première couche ayant une rigidité supérieure à celle de la seconde couche.

16. Capsule selon la revendication 15, dans laquelle la première couche de matériau (27) est une couche de polyéthylène téréphtalate (PET-P) et la seconde couche de matériau (28) est une couche de polypropylène copolymère (CPP).

17. Capsule selon la revendication 16, dans laquelle la couche (27) de PET-P a une épaisseur d'environ 15 µm et la couche (28) de CPP a une épaisseur d'environ 30 µm.

18. Capsule selon l'une quelconque des revendications précédentes, dans laquelle la zone de sortie de la feuille (24) comprend de 50 à 250 ouvertures (25), de préférence de 70 à 190, de préférence encore de 100 à 160 ouvertures, le diamètre d'ouverture moyen étant entre 0,1 mm et 0,5 mm.

19. Capsule selon l'une quelconque des revendications précédentes, dans laquelle une surface ouverte de la feuille (24) formée par une surface totale des ouvertures de sortie (25) est entre 0,4 et 49,1 mm².

20. Capsule selon l'une quelconque des revendications précédentes, dans laquelle le fond (16) comprend un filtre d'entrée (19, 19', 19"), par exemple un fond sensiblement rigide (16) comprenant une pluralité d'ouvertures d'entrée (17) ou par exemple une feuille poreuse, telle qu'une feuille de papier ou un matériau non tissé similaire, ou une feuille perforée, telle qu'un film polymère pourvu d'une pluralité d'ouvertures d'entrée, pour fournir le liquide au produit extractible à travers celui-ci.

21. Capsule selon l'une quelconque des revendications précédentes, dans laquelle l'espace intérieur de la capsule qui constitue le volume de la capsule va de 10 à 20 ml, de préférence de 11 à 18 ml, de préférence encore de 10 à 13 ml en excluant environ 12 ml ou de préférence encore est égal à environ 12 ml.

22. Capsule selon l'une quelconque des revendications précédentes, dans laquelle la surface de la feuille qui n'est pas recouverte de la couche formant filtre comprend p % de la superficie totale de la feuille qui forme une limite de l'espace intérieur de la capsule, p se trouvant dans la plage de 29 à 99,5, de préférence dans la plage de 44 à 99,5 et de préférence encore dans la plage de 54 à 99,5.

23. Capsule selon la revendication 22, dans laquelle la superficie de la feuille qui n'est pas recouverte de la couche formant filtre et qui est pourvue des ouvertures de sortie est f*p %, f se trouvant dans la plage de 0,5 à 1.

24. Capsule selon l'une quelconque des revendications précédentes, dans laquelle la couche formant filtre s'étend jusqu'à la paroi circonférentielle, plus particulièrement dans laquelle la limite extérieure complète de la couche formant filtre s'étend jusqu'à la paroi circonférentielle.

25. Capsule selon l'une quelconque des revendications précédentes, dans laquelle une première partie de la superficie de la feuille qui est recouverte de la couche formant filtre se trouve au moins sensiblement entièrement adjacente à la paroi circonférentielle.

26. Capsule selon la revendication 25, dans laquelle c % d'une limite externe de la première partie de la feuille se trouvent adjacents à la paroi circonférentielle, c étant supérieur à 50, de préférence supérieur à 85, de préférence encore supérieur à 95 et c étant de manière préférée entre toutes égal à 100.

27. Capsule selon l'une quelconque des revendications 1 à 24 précédentes, dans laquelle la couche formant filtre s'étend jusqu'à chaque position de la paroi circonférentielle adjacente à la feuille.

28. Capsule selon l'une quelconque des revendications précédentes 1 à 23, dans laquelle la couche formant filtre ne s'étend pas jusqu'à la paroi circonférentielle.

29. Capsule selon l'une quelconque des revendications précédentes, dans laquelle la couche formant filtre comprend une seule ouverture.

30. Capsule selon la revendication 29, dans laquelle l'ouverture a une superficie qui est supérieure à la superficie de l'ouverture de sortie ayant la plus grande superficie.

31. Capsule selon l'une quelconque des revendications 1 à 28 précédentes, dans laquelle la couche formant filtre comprend une pluralité d'ouvertures.

32. Capsule selon la revendication 31, dans laquelle chaque ouverture a une superficie qui est supérieure à la superficie de l'ouverture de sortie ayant la plus grande superficie.

33. Capsule selon l'une quelconque des revendications précédentes, dans laquelle une deuxième partie de la superficie de la feuille dans laquelle la pluralité d'ouvertures de sortie sont réparties se trouve au moins sensiblement entièrement à une certaine distance de la paroi circonférentielle.

34. Capsule selon l'une quelconque des revendications précédentes, dans laquelle une troisième partie de la superficie de la feuille qui n'est pas recouverte de la couche formant filtre se trouve au moins sensiblement entièrement à une certaine distance de la paroi circonférentielle.

35. Capsule selon la revendication 34, dans laquelle a % d'une limite circonférentielle externe de la troisième partie de la superficie de la feuille se trouvent à une certaine distance de la paroi circonférentielle, a étant supérieur à 50, de préférence supérieur à 85, de préférence encore supérieur à 95 et a étant de manière préférée entre toutes égal à 100 et une certaine distance étant définie comme allant de 5 à 30 % du diamètre de l'espace intérieur adjacent à la feuille.

36. Capsule selon l'une quelconque des revendications précédentes, dans laquelle la couche formant filtre a la forme d'un anneau.

37. Capsule selon les revendications 24 et 36 ou les revendications 27 et 36, dans laquelle une ouverture centrale de l'anneau a son plus grand diamètre situé dans la plage de 25 % à 75 % du plus grand diamètre de l'espace intérieur sur la feuille.

38. Capsule selon les revendications 28 et 36, dans laquelle la zone de la feuille adjacente à la paroi circonférentielle et qui n'est pas recouverte de l'anneau représente x % de la zone totale de la feuille qui forme une limite de l'espace intérieur, x se trouvant dans la plage de 10 à 50, de préférence dans la plage de 15 à 40.

39. Capsule selon la revendication 38, dans laquelle une ouverture centrale de l'anneau a son plus grand diamètre situé dans la plage de 15 % à 60 % du plus grand diamètre de l'espace intérieur sur la feuille.

40. Capsule selon la revendication 36, dans laquelle une limite circonférentielle externe de la couche formant filtre se trouve adjacente à la paroi circonférentielle et dans laquelle la zone centrale a de préférence une section transversale de S mm, S se trouvant dans la plage de 12 à 26, de préférence dans la plage de 14 à 25 et de préférence encore dans la plage de 16 à 24 et dans laquelle le diamètre extérieur de la partie de la couche formant filtre qui forme une limite de l'espace intérieur a de préférence une section transversale d'environ 28 à 30mm et/ou dans laquelle le diamètre de l'espace intérieur près de la feuille est de préférence d'environ 28 à 30 mm.

41. Capsule selon l'une quelconque des revendications 1 à 35 précédentes, dans laquelle la couche formant filtre a la forme d'une bande.

42. Capsule selon la revendication 41, dans laquelle la couche formant filtre ayant la forme d'une bande est pourvue de deux extrémités opposées se trouvant adjacentes à la paroi circonférentielle et deux côtés opposés se trouvant chacun à une certaine distance de la paroi circonférentielle.

43. Capsule selon l'une quelconque des revendications 1 à 35 précédentes, dans laquelle la couche formant filtre a la forme d'un disque.

44. Capsule selon l'une quelconque des revendications précédentes 1 à 35, dans laquelle la couche formant filtre a la forme d'une marque DE.

45. Capsule selon l'une quelconque des revendications précédentes, **caractérisée en ce qu'**un centre du filtre coïncide au moins sensiblement avec un centre de la partie de la feuille qui forme une limite de l'espace intérieur.

46. Capsule selon l'une quelconque des revendications précédentes, dans laquelle la couche formant filtre remplit c % du volume de l'espace intérieur de la capsule, c se trouvant dans la plage de 0,1 à 8, de préférence dans la plage de 0,1 à 6,5, de préférence encore dans la plage de 0,1 à 3.

47. Capsule selon l'une quelconque des revendications précédentes, dans laquelle une résistance à l'écoulement de la couche formant filtre est supérieure à une résistance à l'écoulement du produit extractible.

48. Capsule selon l'une quelconque des revendications précédentes, dans laquelle une résistance à l'écoulement de la couche formant filtre est inférieure à une résistance à l'écoulement du produit extractible lorsqu'il est extrait avec un liquide sous une pression de 9 à 18 bars.

49. Capsule selon l'une quelconque des revendications précédentes, dans laquelle une résistance à l'écoulement de la couche formant filtre est **caractérisée par** T dans laquelle, lorsqu'on utilise un dispositif de test de papier filtre de conception Herzberg, T est le temps en secondes qu'il faut à 100 ml d'eau pour s'écouler à travers une zone de 10 cm² d'un échantillon de la couche formant filtre dans une direction perpendiculaire à un plan dans lequel se trouve l'échantillon, avec une colonne d'eau de départ de 33 cm, la température de l'eau étant de 20 degrés C, T se trouvant dans la plage de 4 à 150, de préférence de 4 à 30, de préférence encore de 5 à 20, par exemple dans la plage de 4 à 15 pour un papier filtrant, par exemple dans la plage de 60 à 150 pour un non tissé blanc et par exemple dans la plage de 45 à 80 pour un non tissé bleu.

50. Capsule selon l'une quelconque des revendications précédentes, dans laquelle la masse volumique du produit extractible est D g/cm³, D se trouvant dans la plage de 0,278 à 0,5, de préférence dans la plage de 0,313 à 0,455, de préférence encore dans la plage de 0,379 à 0,416.

51. Capsule selon l'une quelconque des revendications précédentes, dans laquelle le produit extractible est du café moulu et dans laquelle une granulométrie moyenne du produit extractible est E micromètres, E se trouvant dans la plage de 100 à 1000, de préférence dans la plage de 200 à 750, de préférence encore dans la plage de 250 à 500.

52. Capsule selon l'une quelconque des revendications précédentes, dans laquelle les particules du produit extractible comprennent L % de fines en volume, L se trouvant dans la plage de 7 à 60, de préférence dans la plage de 8 à 30, de préférence encore dans la plage de 10 à 20.

53. Capsule selon l'une quelconque des revendications précédentes, dans laquelle la zone de sortie de la feuille (24) comprend de 50 à 250 ouvertures (25), de préférence de 70 à 190, de préférence encore de 100 à 160 ouvertures.

54. Capsule selon l'une quelconque des revendications précédentes, dans laquelle une surface ouverte moyenne de l'ouverture de sortie est de z mm² par ouverture de sortie, z se trouvant dans la plage de 0,008 à 0,2, de préférence dans la plage de 0,03 à 0,13, de préférence encore dans la plage de 0,05 à 0,1.

55. Capsule selon l'une quelconque des revendications précédentes, dans laquelle un diamètre moyen de l'ouverture de sortie est de d µm par ouverture de sortie, d se trouvant dans la plage de 100 à 500, de préférence dans la plage de 200 à 400, de préférence encore dans la plage de 250 à 350.

56. Capsule selon l'une quelconque des revendications précédentes, dans laquelle la couche formant filtre a une épaisseur de T mm, T étant dans la plage de 0,05 à 0,01, en excluant 0,01, ou de 0,01 à 1 ou de 1 à 10 en excluant 1, de préférence de 0,05 à 0,5 , de préférence encore de 0,05 à 0,2.

57. Capsule selon l'une quelconque des revendications précédentes, dans laquelle la couche formant filtre comprend un empilement de sous-couches formant filtre, chaque sous-couche formant filtre étant en forme de feuille.

58. Capsule selon la revendication 57, dans laquelle l'empilement comprend de 2 à 6 sous-couches formant filtre.

59. Capsule selon l'une quelconque des revendications précédentes, dans laquelle le produit extractible comprend ou consiste en H grammes de café moulu, H étant dans la plage de 4 à 11, de préférence dans la plage de 5 à 8 et de préférence encore dans la plage de 5,3 à 6.

60. Capsule selon l'une quelconque des revendications précédentes, dans laquelle le fond comprend une pluralité de fentes formant les ouvertures d'entrée de la capsule.

61. Système pour la préparation d'une quantité prédéfinie d'une boisson propre à la consommation au moyen d'un produit extractible, comprenant :
une capsule échangeable (2) selon l'une quelconque des revendications précédentes, et
un appareil (4) comprenant un réceptacle (6) destiné à contenir la capsule échangeable, et un dispositif de distribution de liquide (5) destiné à fournir une quantité d'un liquide, tel que de l'eau, sous pression à la capsule échangeable,
dans lequel le dispositif de distribution de liquide (5) est agencé de manière à fournir le liquide au produit extractible à travers le fond (16) pour former la boisson,
dans lequel le réceptacle (6) comprend une surface de surface de support (10), et dans lequel la capsule (2) est agencée de manière à venir au moins partiellement en butée contre la surface de support (10) pour évacuer la boisson préparée de la capsule (2) à travers le couvercle (20, 20', 20",20"') et à travers la surface de support (10),
dans lequel le système comprend un orifice de sortie (32) qui, en service, est en communication de liquide avec le couvercle (20, 20', 20", 20"') pour évacuer la boisson préparée de la capsule (2) et délivrer la boisson dans un récipient tel qu'une tasse.

62. Système selon la revendication 61, dans lequel le liquide est fourni sous une pression de 4 à 20 bars, de préférence sous 9 à 18 bars.

63. Système selon la revendication 61 ou 62, dans lequel le produit extractible comprend ou consiste en du café moulu, le volume versé de café torréfié et moulu étant de U cm³/250 g, U se trouvant dans la plage de 500 à 900, de préférence dans la plage de 575 à 700, de préférence encore dans la plage de 600 à 660.

64. Système selon les revendications 61, 62 ou 63, dans lequel V ml de liquide sont fournis à la capsule, V se trouvant dans la plage de 20 à 200, de préférence dans la plage de 25 à 140, de préférence encore dans la plage de 25 à 110.

65. Système selon l'une quelconque des revendications 61 à 64 précédentes, dans lequel une résistance à l'écoulement de la couche formant filtre est inférieure à une résistance à l'écoulement du produit extractible lorsqu'il est extrait avec un liquide sous une pression de 5 à 19 bars.

66. Système selon l'une quelconque des revendications 61 à 65, dans lequel la feuille du couvercle est conçue pour rester intacte lorsqu'elle est utilisée dans l'appareil qui comprend en outre des moyens de percement du couvercle destinés à percer un couvercle d'une capsule fermée.

67. Procédé pour la préparation d'une quantité prédéfinie d'une boisson propre à la consommation au moyen d'un produit extractible, au moyen d'un système (1) selon les revendications 61 à 66 et/ou d'une capsule échangeable (2) selon l'une quelconque des revendications 1 à 60.

68. Procédé selon la revendication 67, dans lequel le liquide est fourni sous une pression de 4 à 20 bars, de préférence sous 9 à 18 bars.

69. Procédé selon les revendications 67 ou 68, dans lequel le produit extractible comprend ou consiste en du café moulu, le volume versé de café torréfié et moulu étant de U cm³/250 g, U se trouvant dans la plage de 500 à 900, de préférence dans la plage de 575 à 700, de préférence encore dans la plage de 600 à 660.

70. Procédé selon les revendications 67, 68 ou 69, dans lequel V ml de liquide sont fournis à la capsule, V se trouvant dans la plage de 20 à 200, de préférence dans la plage de 25 à 140, de préférence encore dans la plage de 25 à 110.

71. Procédé selon l'une quelconque des revendications 67 à 70, dans lequel la boisson, par exemple un café allongé, est préparée en J secondes, J se trouvant dans la plage de 30 à 70, de préférence dans la plage de 38 à 55 et de préférence encore dans la plage de 42 à 48 et dans lequel la quantité de boisson préparée est L ml, L se trouvant dans la plage de 100 à 120, de préférence dans la plage de 105 à 115 et de préférence encore dans la plage de 108 à 112.

72. Procédé selon l'une quelconque des revendications 67 à 70, dans lequel la boisson, par exemple un expresso, est préparée en J secondes, J se trouvant dans la plage de 10 à 45, de préférence dans la plage de 15 à 35 et de préférence encore dans la plage de 18 à 32 et dans lequel la quantité de boisson préparée est L ml, L se trouvant dans la plage de 35 à 45, de préférence dans la plage de 38 à 42 et de préférence encore dans la plage de 39 à 40.

73. Procédé selon l'une quelconque des revendications 67 à 72 précédentes, dans lequel une résistance à l'écoulement de la couche formant filtre est G fois inférieure à une résistance à l'écoulement du produit extractible lorsqu'il est extrait avec un liquide sous une pression de 9 à 18 bars.
